# EUROPEAN PATENT APPLICATION

(11) **EP 3 902 012 A1**
(43) Date of publication of application: **27.10.2021**
(21) Application number: 20900750.9
(22) Date of filing: 29.02.2020
(51) Int. Cl.: H01L 29/06

(54) **FAULT DIAGNOSTIC METHOD AND APPARATUS, AND VEHICLE**

(71) Applicant: Huawei Technologies Co., Ltd., Shenzhen, Guangdong 518129 (CN)
(72) Inventor: YASMIN, Rehana, Shenzhen, Guangdong 518129 (CN); YANG, Yanjiang, Shenzhen, Guangdong 518129 (CN); WEI, Zhuo, Shenzhen, Guangdong 518129 (CN); SHA, Qingdi, Shenzhen, Guangdong 518129 (CN); LI, Zhen, Shenzhen, Guangdong 518129 (CN)
(74) Representative: Gill Jennings & Every LLP
(86) International application number: PCT/CN2020/077357
(87) International publication number: WO 2021/168864

(57) **Abstract**

A fault diagnosis method, an apparatus, and a vehicle are provided, to resolve a prior-art problem that an unauthorized diagnostic tester interferes with a vehicle. The method may be applied to a vehicle. The vehicle includes an ECU and a gateway. The gateway is configured to manage the ECU. The method includes: The gateway performs authentication on a diagnostic tester. If the authentication succeeds, the gateway generates a first shared key, and sends the first shared key to the ECU. The first shared key is a key shared between the ECU and the diagnostic tester. The ECU encrypts to-be-transmitted diagnostic data by using the first shared key, and sends encrypted diagnostic data to the diagnostic apparatus. The gateway performs authentication on the diagnostic tester. This is conducive to avoiding interference of an unauthorized diagnostic tester on the vehicle, and is also conducive to reducing overheads of the ECUs. Further, it is conducive to improving security of the diagnostic data transmitted by the ECU to the diagnostic tester.

## Description

### TECHNICAL FIELD

This application relates to the field of fault diagnosis technologies, and in particular, to a fault diagnosis method, an apparatus, and a vehicle.

### BACKGROUND

As electronic technologies develop, automation degrees of vehicles are increasingly high, and relatively high requirements are imposed on repair and detection of vehicles accordingly. At present, an on-board diagnostic system may be mounted in a vehicle, and the on-board diagnostic system may be used to record a fault that occurs during use of the vehicle. When a fault occurs in the vehicle, the fault in the vehicle can be learnt by analyzing diagnostic data obtained from the on-board diagnostic system, to troubleshoot the fault in the vehicle.

In the prior art, a method for obtaining diagnostic data in an on-board diagnostic system includes: A tester is connected to the on-board diagnostic system; and the tester may read diagnostic data in the on-board diagnostic system, for example, a data troubleshooting code (data troubleshoot codes, DTCs), and determine a current fault cause based on the obtained diagnostic data. However, because the diagnostic data may be confidential and sensitive, if an unauthorized tester obtains the diagnostic data, a malicious testing algorithm may be run or malicious firmware may be installed, causing adverse intervention to a vehicle. Therefore, the on-board diagnostic system and the tester need to perform mutual authentication, to avoid interference of the unauthorized tester on the vehicle.

Currently, each electronic control unit (electronic control unit, ECU) in the on-board diagnostic system usually performs authentication on the tester. However, because resources of ECUs are limited, some ECUs possibly cannot perform authentication on the tester. As a result, an unauthorized tester may interfere with the vehicle.

### SUMMARY

This application provides a fault diagnosis method, an apparatus, and a vehicle, to resolve a prior-art problem that an unauthorized diagnostic apparatus interferes with a vehicle.

According to a first aspect, this application provides a fault diagnosis method. The method may be applied to a vehicle. The vehicle may include a gateway and an ECU, and the gateway is configured to manage the ECU. The method includes: The gateway performs authentication on a diagnostic apparatus. If the authentication succeeds, the gateway generates a first shared key. The gateway sends the first shared key to the ECU. The first shared key is a key shared between the ECU and the diagnostic apparatus, and the first shared key is used by the ECU to encrypt to-be-transmitted diagnostic data. The to-be-transmitted diagnostic data is data to be transmitted by the EUC to the diagnostic apparatus. The diagnostic apparatus is configured to obtain information about the vehicle.

Based on this solution, the gateway performs authentication on the diagnostic apparatus. This is conducive to avoiding interference of an unauthorized diagnostic apparatus on the vehicle. In addition, only the gateway performs authentication on the diagnostic apparatus, and there is no need to perform authentication on the diagnostic apparatus by all ECUs. This achieves higher efficiency of performing authentication on the diagnostic apparatus, and is also conducive to reducing overheads of the ECUs. Further, the gateway may generate the first shared key for the EUC. This is conducive to further reducing the overheads of the ECUs. The first shared key is used by the ECU to encrypt the to-be-transmitted diagnostic data. In this way, it is conducive to improving security of the diagnostic data transmitted by the ECU to the diagnostic apparatus, and even if the diagnostic data transmitted by the ECU to the diagnostic apparatus is stolen by an unauthorized device, the unauthorized device cannot obtain the real diagnostic data because the diagnostic data is ciphertext data that has been encrypted by using the first shared key.

In a possible implementation, the gateway may encrypt the first shared key to obtain an encrypted first shared key. Further, the gateway sends the encrypted first shared key to the ECU.

The gateway sends the encrypted first shared key to the ECU. In this way, it is conducive to improving security of the first shared key, and even if the first shared key is stolen by the unauthorized device, the unauthorized device cannot obtain the real first shared key because the first shared key is an encrypted ciphertext.

In a possible implementation, the gateway may also send the first shared key to the diagnostic apparatus. This is conducive to improving efficiency of obtaining the first shared key by the diagnostic apparatus.

This application provides, by using examples, the following two manners of performing authentication by the gateway on the diagnostic apparatus.

First manner: The gateway performs authentication on the diagnostic apparatus based on a public key infrastructure (public key infrastructure, PKI) certificate of the diagnostic apparatus and a signature of a random number of the diagnostic apparatus.

The gateway receives a first signature and a first PKI certificate from the diagnostic apparatus, where the first signature is obtained by signing, by using a private key of the diagnostic apparatus, a first random number generated by the diagnostic apparatus. If the gateway successfully checks the first PKI certificate, the gateway may obtain a public key of the diagnostic apparatus. The gateway may check the first signature by using the public key of the diagnostic apparatus.

The gateway can determine, by checking the first PKI certificate of the diagnostic apparatus, that the public key of the diagnostic apparatus corresponding to an identity of the diagnostic apparatus is real and valid. The gateway can determine, by checking the first signature obtained by signing the diagnostic apparatus, validity of the public key of the diagnostic apparatus, that is, determine whether the diagnostic apparatus has the private key corresponding to the public key.

Based on the first manner, if the authentication performed by the gateway on the diagnostic apparatus succeeds, the gateway generates a second random number; and generates the first shared key based on the second random number and the first random number, where the first random number is obtained after the gateway successfully checks the first signature by using the public key of the diagnostic apparatus.

Further, optionally, the gateway may sign the second random number by using a private key of the gateway, to obtain a second signature; and send the second signature and a PKI certificate to the diagnostic apparatus, where the second PKI certificate and the second signature are used by the diagnostic apparatus to perform authentication on the gateway. In this way, authentication performed by the gateway on the diagnostic apparatus and authentication performed by the diagnostic apparatus on the gateway can be implemented. In other words, two-way authentication between the diagnostic apparatus and the gateway can be implemented.

Second manner: The gateway performs authentication on the diagnostic apparatus based on a PKI certificate of the diagnostic apparatus and a challenge-response mechanism.

The gateway receives a first public key infrastructure PKI certificate from the diagnostic apparatus. If the gateway successfully checks the first PKI certificate, the gateway may obtain a public key of the diagnostic apparatus. The gateway generates a first challenge, and sends the first challenge to the diagnostic apparatus. Then, the gateway receives a third signature from the diagnostic apparatus, where the third signature is obtained by signing the first challenge by using a private key of the diagnostic apparatus. The gateway checks the third signature by using the public key of the diagnostic apparatus.

The gateway can determine, by checking the first PKI certificate of the diagnostic apparatus, that the public key of the diagnostic apparatus corresponding to an identity of the diagnostic apparatus is real and valid. The gateway can determine, by checking the third signature obtained by signing the diagnostic apparatus, validity of the public key of the diagnostic apparatus, that is, determine whether the diagnostic apparatus has the private key corresponding to the public key.

Further, optionally, to implement authentication on the gateway by the diagnostic apparatus, the gateway may receive a second challenge from the diagnostic apparatus; sign the second challenge by using a private key of the gateway, to obtain a fourth signature; and send the fourth signature and a second PKI certificate to the diagnostic apparatus, where the second PKI certificate and the fourth signature are used by the diagnostic apparatus to perform authentication on the gateway.

According to a second aspect, this application provides a fault diagnosis method for a vehicle. The vehicle may include a gateway and an ECU, and the gateway is configured to manage the ECU. The method includes: A diagnostic apparatus performs authentication on the gateway. If the authentication succeeds, the diagnostic apparatus obtains a first shared key. The first shared key is a key shared between the ECU and the diagnostic apparatus. The diagnostic apparatus receives diagnostic data that has been encrypted by using the first shared key and that comes from the ECU. The diagnostic apparatus decrypts the encrypted diagnostic data by using the first shared key.

Based on this solution, the diagnostic apparatus performs authentication on the gateway. This is conducive to avoiding that the diagnostic apparatus is connected to an unauthorized device, thereby preventing the unauthorized device from arbitrarily sending data to the diagnostic apparatus. In addition, because of strong performance of the gateway, efficiency of performing authentication by the diagnostic apparatus on the gateway is relatively high. Further, the diagnostic data received by the diagnostic apparatus is diagnostic data that has been encrypted by the EUC by using the first shared key. In this way, it is conducive to improving security of the diagnostic data transmitted by the ECU to the diagnostic apparatus, and even if the diagnostic data transmitted by the ECU to the diagnostic apparatus is stolen by an unauthorized device, the unauthorized device cannot obtain the real diagnostic data because the diagnostic data is ciphertext data that has been encrypted by using the first shared key.

In a possible implementation, the diagnostic apparatus may generate the first shared key, or may receive the first shared key sent by the gateway. Further, optionally, the diagnostic apparatus may receive a second random number from the gateway. The diagnostic apparatus generates a first random number, and generates the first shared key based on the first random number and the second random number.

This application provides, by using examples, the following two manners of performing authentication by the diagnostic apparatus on the gateway.

Manner 1: The diagnostic apparatus performs authentication on the gateway based on a PKI certificate of the gateway and a signature of a random number of the gateway.

The diagnostic apparatus receives a second PKI certificate and a second signature from the gateway, where the second signature is obtained by signing, by using a private key of the gateway, the second random number generated by the gateway. If the diagnostic apparatus successfully checks the second PKI certificate, the diagnostic apparatus obtains a public key of the gateway. The diagnostic apparatus checks the second signature by using the public key of the gateway.

The diagnostic apparatus can determine, by checking the second PKI certificate of the gateway, that the public key of the gateway corresponding to an identity of the gateway is real and valid. The diagnostic apparatus can determine, by checking the second signature obtained by signing the gateway, validity of the public key of the gateway, that is, determine whether the gateway has the private key corresponding to the public key.

Based on the manner 1, if the diagnostic apparatus successfully checks the second signature, the diagnostic apparatus obtains the second random number. The diagnostic apparatus may generate the first random number, and generate the first shared key based on the first random number and the second random number.

Further, optionally, the diagnostic apparatus generates the first random number, and signs the first random number by using a private key of the diagnostic apparatus, to obtain a first signature; and sends the first signature and a first public key infrastructure PKI certificate to the gateway, where the first PKI certificate and the first signature are used by the gateway to perform authentication on the diagnostic apparatus. In this way, authentication performed by the gateway on the diagnostic apparatus and authentication performed by the diagnostic apparatus on the gateway can be implemented. In other words, two-way authentication between the diagnostic apparatus and the gateway can be implemented.

Manner 2: The diagnostic apparatus performs authentication on the gateway based on a PKI certificate of the gateway and a response-challenge mechanism.

The diagnostic apparatus generates a second challenge, and sends the second challenge to the gateway. The diagnostic apparatus receives a fourth signature and a second public key infrastructure PKI certificate from the gateway, where the fourth signature is obtained by signing the second challenge by using a private key of the gateway. If the diagnostic apparatus successfully checks the second PKI certificate, the diagnostic apparatus obtains a public key of the gateway. The gateway checks the fourth signature by using the public key of the gateway.

The diagnostic apparatus can determine, by checking the second PKI certificate of the gateway, that the public key of the gateway corresponding to an identity of the gateway is real and valid. The diagnostic apparatus can determine, by checking the fourth signature obtained by signing the gateway, validity of the public key of the gateway, that is, determine whether the gateway has the private key corresponding to the public key.

Further, optionally, the diagnostic apparatus receives a first challenge from the gateway, and signs the first challenge by using a public key of the diagnostic apparatus, to obtain a third signature. The diagnostic apparatus sends the third signature and a first PKI certificate to the gateway, where the third signature and the first PKI certificate are used by the gateway to perform authentication on the diagnostic apparatus. In this way, authentication performed by the gateway on the diagnostic apparatus and authentication performed by the diagnostic apparatus on the gateway can be implemented. In other words, two-way authentication between the diagnostic apparatus and the gateway can be implemented.

According to a third aspect, this application provides a fault diagnosis method. The method may be applied to a vehicle. The vehicle may include a gateway and an ECU, and the gateway is configured to manage the ECU. The method includes: The gateway performs authentication on a diagnostic apparatus, where the diagnostic apparatus is configured to obtain information about the vehicle. If the authentication succeeds, the gateway generates a first shared key. The first shared key is a key shared between the ECU and the diagnostic apparatus. The gateway sends the first shared key to the ECU. The ECU encrypts to-be-transmitted diagnostic data by using the first shared key, and sends encrypted diagnostic data to the diagnostic apparatus.

In a possible implementation, the gateway may encrypt the first shared key to obtain an encrypted first shared key. Further, the gateway sends the encrypted first shared key to the ECU.

Further, optionally, the gateway may send the first shared key to the diagnostic apparatus.

This application provides, by using examples, the following two manners of performing authentication by the gateway on the diagnostic apparatus.

First manner: The gateway performs authentication on the diagnostic apparatus based on a PKI certificate of the diagnostic apparatus and a signature of a random number of the diagnostic apparatus.

The gateway receives a first signature and a first PKI certificate from the diagnostic apparatus, where the first signature is obtained by signing, by using a private key of the diagnostic apparatus, a first random number generated by the diagnostic apparatus. If the gateway successfully checks the first PKI certificate, the gateway may obtain a public key of the diagnostic apparatus. The gateway may check the first signature by using the public key of the diagnostic apparatus.

The gateway can determine, by checking the first PKI certificate of the diagnostic apparatus, that the public key of the diagnostic apparatus corresponding to an identity of the diagnostic apparatus is real and valid. The gateway can determine, by checking the first signature obtained by signing the diagnostic apparatus, validity of the public key of the diagnostic apparatus, that is, determine whether the diagnostic apparatus has the private key corresponding to the public key.

Based on the first manner, if the authentication performed by the gateway on the diagnostic apparatus succeeds, the gateway generates a second random number; and generates the first shared key based on the second random number and the first random number, where the first random number is obtained after the gateway successfully checks the first signature by using the public key of the diagnostic apparatus.

Further, optionally, the gateway may sign the second random number by using a private key of the gateway, to obtain a second signature; and send the second signature and a PKI certificate to the diagnostic apparatus, where the second PKI certificate and the second signature are used by the diagnostic apparatus to perform authentication on the gateway. In this way, authentication performed by the gateway on the diagnostic apparatus and authentication performed by the diagnostic apparatus on the gateway can be implemented. In other words, two-way authentication between the diagnostic apparatus and the gateway can be implemented.

Second manner: The gateway performs authentication on the diagnostic apparatus based on a PKI certificate of the diagnostic apparatus and a challenge-response mechanism.

The gateway receives a first public key infrastructure PKI certificate from the diagnostic apparatus. If the gateway successfully checks the first PKI certificate, the gateway may obtain a public key of the diagnostic apparatus. The gateway generates a first challenge, and sends the first challenge to the diagnostic apparatus. Then, the gateway receives a third signature from the diagnostic apparatus, where the third signature is obtained by signing the first challenge by using a private key of the diagnostic apparatus. The gateway checks the third signature by using the public key of the diagnostic apparatus.

The gateway can determine, by checking the first PKI certificate of the diagnostic apparatus, that the public key of the diagnostic apparatus corresponding to an identity of the diagnostic apparatus is real and valid. The gateway can determine, by checking the third signature obtained by signing the diagnostic apparatus, validity of the public key of the diagnostic apparatus, that is, determine whether the diagnostic apparatus has the private key corresponding to the public key.

Further, optionally, to implement authentication on the gateway by the diagnostic apparatus, the gateway may receive a second challenge from the diagnostic apparatus; sign the second challenge by using a private key of the gateway, to obtain a fourth signature; and send the fourth signature and a second PKI certificate to the diagnostic apparatus, where the second PKI certificate and the fourth signature are used by the diagnostic apparatus to perform authentication on the gateway.

In a possible implementation, before encrypting the to-be-transmitted diagnostic data by using the first shared key, the ECU may first determine that the diagnostic apparatus has the first shared key. This can facilitate subsequent exchange of the diagnostic data between the EUC and the diagnostic apparatus.

For technical effects that can be achieved in the third aspect, refer to the descriptions of the beneficial effects in the first aspect. Details are not described herein again.

According to a fourth aspect, this application provides a fault diagnosis method. The method may be applied to a vehicle. The vehicle may include a gateway and an ECU, and the gateway is configured to manage the ECU. The method includes: The gateway performs authentication on a diagnostic apparatus. If the authentication succeeds, the gateway sends a first message to the ECU. The first message is used to indicate the ECU to generate a first shared key. The first shared key is a key shared between the ECU and the diagnostic apparatus, and the first shared key is used by the ECU to encrypt to-be-transmitted diagnostic data. The diagnostic apparatus is configured to obtain information about the vehicle.

Based on this solution, the gateway performs authentication on the diagnostic apparatus. This is conducive to avoiding interference of an unauthorized diagnostic apparatus on the vehicle. In addition, only the gateway performs authentication on the diagnostic apparatus, and there is no need to perform authentication on the diagnostic apparatus by all ECUs. This achieves higher efficiency of performing authentication on the diagnostic apparatus, and is also conducive to reducing overheads of the ECUs.

In a possible implementation, the gateway may receive a first PKI certificate from the diagnostic apparatus. If the gateway successfully checks the first PKI certificate, the gateway obtains a public key of the diagnostic apparatus. The gateway generates a third challenge, and sends the third challenge to the diagnostic apparatus. The gateway receives a fifth signature from the diagnostic apparatus, where the fifth signature is obtained by signing the third challenge by using a private key of the diagnostic apparatus. The gateway checks the fifth signature by using the public key of the diagnostic apparatus. In this way, authentication performed by the gateway on the diagnostic apparatus can be implemented.

In a possible implementation, if the authentication performed by the gateway on the diagnostic apparatus succeeds, the gateway sends, to the diagnostic apparatus, a third random number that comes from the ECU; and sends, to the ECU, a fourth random number that comes from the diagnostic apparatus, where the third random number and the fourth random number are used by the ECU to generate the first shared key and used by the diagnostic apparatus to generate the first shared key.

According to a fifth aspect, this application provides a fault diagnosis method. The method is applied to a vehicle. The vehicle may include a gateway and an ECU, and the gateway is configured to manage the ECU. The method includes: The gateway performs authentication on a diagnostic apparatus, where the diagnostic apparatus is configured to obtain information about the vehicle. If the authentication succeeds, the gateway sends a first message to the ECU. The first message is used to indicate the ECU to generate a first shared key. The first shared key is a key shared between the ECU and the diagnostic apparatus. The ECU generates the first shared key based on the first message. The ECU encrypts to-be-transmitted diagnostic data by using the first shared key, and sends encrypted diagnostic data to the diagnostic apparatus.

For a process in which the gateway performs authentication on the diagnostic apparatus, refer to the descriptions of the first manner and the second manner in the first aspect. Details are not described herein again.

In a possible implementation, the first message includes a fourth random number, and the fourth random number is sent by the diagnostic apparatus to the gateway. After receiving the first message, the ECU generates a third random number. The ECU generates the first shared key based on the third random number and the fourth random number.

For technical effects that can be achieved in the fifth aspect, refer to the descriptions of the beneficial effects in the fourth aspect. Details are not described herein again.

According to a sixth aspect, this application provides a fault diagnosis method. The method may be applied to a diagnostic system. The diagnostic system may include a vehicle and a diagnostic apparatus. The vehicle may include a gateway and an ECU, and the gateway is configured to manage the ECU. The method includes: The gateway performs authentication on the diagnostic apparatus, where the diagnostic apparatus is configured to obtain information about the vehicle. If the authentication succeeds, the gateway generates a first shared key. The first shared key is a key shared between the ECU and the diagnostic apparatus. The gateway sends the first shared key to the ECU. The ECU encrypts to-be-transmitted diagnostic data by using the first shared key, and sends encrypted diagnostic data to the diagnostic apparatus. The diagnostic apparatus obtains the first shared key, and receives the diagnostic data that has been encrypted by using the first shared key and that comes from the ECU. The diagnostic apparatus decrypts the encrypted diagnostic data by using the first shared key.

In a possible implementation, the diagnostic apparatus may also perform authentication on the gateway. If the authentication succeeds, the diagnostic apparatus obtains the first shared key.

In a possible implementation, the gateway may encrypt the first shared key to obtain an encrypted first shared key. Further, the gateway sends the encrypted first shared key to the ECU.

In a possible implementation, the diagnostic apparatus may generate the first shared key, or may receive the first shared key sent by the gateway. Further, optionally, the diagnostic apparatus may receive a second random number from the gateway. The diagnostic apparatus generates a first random number, and generates the first shared key based on the first random number and the second random number.

For a process in which the gateway performs authentication on the diagnostic apparatus, refer to the descriptions of the first manner and the second manner in the first aspect. Details are not described herein again.

For a process in which the diagnostic apparatus performs authentication on the gateway, refer to the descriptions of the manner 1 and the manner 2 in the second aspect. Details are not described herein again.

To facilitate exchange of the data between the ECU and the diagnostic apparatus, in a possible implementation, the ECU and the diagnostic apparatus may first determine whether the other party has the first shared key.

For technical effects that can be achieved in the sixth aspect, refer to the descriptions of the beneficial effects in the first aspect and the second aspect. Details are not described herein again.

According to a seventh aspect, this application provides a fault diagnosis method. The method may be applied to a diagnostic system. The diagnostic system may include a vehicle and a diagnostic apparatus. The vehicle may include a gateway and an ECU, and the gateway is configured to manage the ECU. The method includes: The gateway performs authentication on the diagnostic apparatus. If the authentication succeeds, the gateway sends a first message to the ECU. The first message is used to indicate the ECU to generate a first shared key. The ECU generates the first shared key based on the first message. The first shared key is a key shared between the ECU and the diagnostic apparatus. The ECU encrypts to-be-transmitted diagnostic data by using the first shared key, and sends encrypted diagnostic data to the diagnostic apparatus. The diagnostic apparatus obtains the first shared key, and receives the diagnostic data that has been encrypted by using the first shared key and that comes from the ECU. The diagnostic apparatus decrypts the encrypted diagnostic data by using the first shared key. The diagnostic apparatus is configured to make diagnosis on the vehicle.

In a possible implementation, the diagnostic apparatus may generate the first shared key, or may receive the first shared key from the gateway.

For a process in which the gateway performs authentication on the diagnostic apparatus, refer to the descriptions of the first manner and the second manner in the first aspect. Details are not described herein again.

For processes in which the gateway and the diagnostic apparatus generate the first shared key, refer to the descriptions in the fourth aspect. Details are not described herein again.

For technical effects that can be achieved in the seventh aspect, refer to the descriptions of the beneficial effects in the fourth aspect. Details are not described herein again.

According to an eighth aspect, this application provides an apparatus. The apparatus has a function of the gateway in the first aspect, the diagnostic apparatus in the second aspect, or the gateway in the fourth aspect. The function may be implemented by using hardware, or may be implemented by hardware executing corresponding software. The hardware or software includes one or more units or modules corresponding to the function.In a possible implementation, the apparatus may be a gateway, or may be a module that may be used in a gateway, for example, a chip, a chip system, or a circuit. The apparatus may include a transceiver and a processor. The processor may be configured to support the apparatus in performing a corresponding function of the gateway described above. The transceiver is configured to support the apparatus in performing communication with a diagnostic apparatus, an ECU in a vehicle, and the like. The transceiver may be an independent receiver, an independent transmitter, a transceiver integrated with receiving and sending functions, or an interface circuit. Optionally, the apparatus may further include a memory. The memory may be coupled to the processor, and stores program instructions and data that are necessary for the apparatus.

When the gateway may be configured to implement the function in the first aspect, for beneficial effects thereof, refer to the descriptions in the first aspect. Details are not described herein again.The processor is configured to: perform authentication on the diagnostic apparatus; and if the authentication succeeds, generate a first shared key. The first shared key is a key shared between the ECU and the diagnostic apparatus, and the first shared key is used by the ECU to encrypt to-be-transmitted diagnostic data. The diagnostic apparatus is configured to obtain information about the vehicle. The transceiver is configured to send the first shared key to the ECU.

In a possible implementation, the processor is specifically configured to encrypt the first shared key to obtain an encrypted first shared key. The transceiver is specifically configured to send the encrypted first shared key to the ECU.

In a possible implementation, the transceiver is further configured to send the first shared key to the diagnostic apparatus.

In a possible implementation, the transceiver is specifically configured to receive a first signature and a first public key infrastructure PKI certificate from the diagnostic apparatus, where the first signature is obtained by signing, by using a private key of the diagnostic apparatus, a first random number generated by the diagnostic apparatus. The processor is specifically configured to: if successfully checking the first PKI certificate, obtain a public key of the diagnostic apparatus; and check the first signature by using the public key of the diagnostic apparatus.

In a possible implementation, the processor is specifically configured to: generate a second random number, and generate the first shared key based on the first random number and the second random number, where the first random number is obtained after the gateway successfully checks the first signature by using the public key of the diagnostic apparatus.

In a possible implementation, the transceiver is further configured to send the second random number to the diagnostic apparatus, where the second random number is used by the diagnostic apparatus to generate the first shared key based on the first random number and the second random number.

In a possible implementation, the processor is further configured to sign the second random number by using a private key of the gateway, to obtain a second signature. The transceiver is further configured to send a second PKI certificate and the second signature to the diagnostic apparatus, where the second PKI certificate and the second signature are used by the diagnostic apparatus to perform authentication on the gateway.

In a possible implementation, the transceiver is specifically configured to receive a first public key infrastructure PKI certificate from the diagnostic apparatus. The processor is specifically configured to: if successfully checking the first PKI certificate, obtain a public key of the diagnostic apparatus; and generate a first challenge. The transceiver is further configured to: send the first challenge to the diagnostic apparatus, and receive a third signature from the diagnostic apparatus, where the third signature is obtained by signing the first challenge by using a private key of the diagnostic apparatus. The processor is further configured to check the third signature by using the public key of the diagnostic apparatus.

In a possible implementation, the transceiver is further configured to receive a second challenge from the diagnostic apparatus. The processor is further configured to sign the second challenge by using a private key of the gateway, to obtain a fourth signature. The transceiver is further configured to send the fourth signature and a second PKI certificate to the diagnostic apparatus, where the second PKI certificate and the fourth signature are used by the diagnostic apparatus to perform authentication on the gateway.

When the gateway is configured to implement the function in the fourth aspect, for beneficial effects thereof, refer to the descriptions in the fourth aspect. Details are not described herein again.

The processor is configured to perform authentication on the diagnostic apparatus, where the diagnostic apparatus is configured to obtain information about the vehicle. If the authentication succeeds, the transceiver is configured to send a first message to the ECU. The first message is used to indicate the ECU to generate a first shared key. The first shared key is a key shared between the ECU and the diagnostic apparatus, and the first shared key is used by the ECU to encrypt to-be-transmitted diagnostic data.

In a possible implementation, the transceiver is specifically configured to receive a first public key infrastructure PKI certificate from the diagnostic apparatus. The processor is specifically configured to: if successfully checking the first PKI certificate, obtain a public key of the diagnostic apparatus; and generate a third challenge. The transceiver is specifically configured to: send the third challenge to the diagnostic apparatus, and receive a fifth signature from the diagnostic apparatus, where the fifth signature is obtained by signing the third challenge by using a private key of the diagnostic apparatus. The processor is specifically configured to check the fifth signature by using the public key of the diagnostic apparatus.

In a possible implementation, the transceiver is further configured to: if the authentication performed on the diagnostic apparatus succeeds, send, to the diagnostic apparatus, a third random number that comes from the ECU; and send, to the ECU, a fourth random number that comes from the diagnostic apparatus, where the third random number and the fourth random number are used by the ECU to generate the first shared key and used by the diagnostic apparatus to generate the first shared key.

In another possible implementation, the apparatus may be a diagnostic apparatus, or may be a component that may be used in a diagnostic apparatus, for example, a chip, a chip system, or a circuit. For beneficial effects thereof, refer to the descriptions in the second aspect. Details are not described herein again. The apparatus may include a transceiver and a processor. The processor may be configured to support the apparatus in performing a corresponding function of the diagnostic apparatus described above. The transceiver is configured to support the apparatus in performing communication with a gateway, an ECU in a vehicle, and the like. The transceiver may be an independent receiver, an independent transmitter, a transceiver integrated with receiving and sending functions, or an interface circuit. Optionally, the apparatus may further include a memory. The memory may be coupled to the processor, and stores program instructions and data that are necessary for the apparatus.

When the diagnostic apparatus is configured to implement the function in the second aspect, for beneficial effects thereof, refer to the descriptions in the second aspect. Details are not described herein again.

The processor is configured to: perform authentication on the gateway; and if the authentication succeeds, obtain a first shared key. The first shared key is a key shared between the ECU and the diagnostic apparatus. The apparatus is configured to make diagnosis on the vehicle. The transceiver is configured to receive diagnostic data that has been encrypted by using the first shared key and that comes from the ECU. The processor is further configured to decrypt the encrypted diagnostic data by using the first shared key.

In a possible implementation, the processor is specifically configured to generate the first shared key, or the transceiver is specifically configured to receive the first shared key from the gateway.

In a possible implementation, the transceiver is specifically configured to receive a second PKI certificate and a second signature from the gateway, where the second signature is obtained by signing, by using a private key of the gateway, a second random number generated by the gateway. The processor is specifically configured to: if successfully checking the second PKI certificate, obtain a public key of the gateway; and check the second signature by using the public key of the gateway.

In a possible implementation, the processor is specifically configured to: if successfully checking the second signature, obtain the second random number; generate a first random number; and generate the first shared key based on the second random number and the first random number.

In a possible implementation, the transceiver is specifically configured to receive the second random number from the gateway. The processor is specifically configured to: generate a first random number; and generate the first shared key based on the second random number and the first random number.

In a possible implementation, the processor of the apparatus is further configured to: generate the first random number, and sign the first random number by using a private key of the diagnostic apparatus, to obtain a first signature. The transceiver is further configured to send the first signature and a first public key infrastructure PKI certificate to the gateway, where the first PKI certificate and the first signature are used by the gateway to perform authentication on the diagnostic apparatus.

In a possible implementation, the processor is specifically configured to generate a second challenge. The transceiver is specifically configured to: send the second challenge to the gateway; and receive a fourth signature and a second public key infrastructure PKI certificate from the gateway, where the fourth signature is obtained by signing the second challenge by using a private key of the gateway. The processor is further configured to: if successfully checking the second PKI certificate, obtain a public key of the gateway; and check the fourth signature by using the public key of the gateway.

In a possible implementation, the transceiver is further configured to receive a first challenge from the gateway. The processor is further configured to sign the first challenge by using a public key of the diagnostic apparatus, to obtain a third signature. The transceiver is further configured to send the third signature and a first PKI certificate to the gateway, where the third signature and the first PKI certificate are used by the gateway to perform authentication on the diagnostic apparatus.

According to a ninth aspect, this application provides an apparatus. The apparatus is configured to: implement the method in any one of the first aspect or the possible implementations of the first aspect, implement the method in any one of the second aspect or the possible implementations of the second aspect, or implement the method in any one of the fourth aspect or the possible implementations of the fourth aspect. The apparatus includes corresponding function modules that are configured to implement steps in the foregoing methods. A function may be implemented by using hardware, or may be implemented by hardware executing corresponding software. The hardware or software includes one or more modules corresponding to the function.

In a possible implementation, the apparatus may be a gateway. The apparatus may include a processing module and a transceiver module. When the gateway may be configured to implement the function in the first aspect, for beneficial effects thereof, refer to the descriptions in the first aspect. Details are not described herein again. The processing module is configured to: perform authentication on a diagnostic apparatus; and if the authentication succeeds, generate a first shared key. The first shared key is a key shared between the ECU and the diagnostic apparatus, and the first shared key is used by the ECU to encrypt to-be-transmitted diagnostic data. The diagnostic apparatus is configured to obtain information about the vehicle. The transceiver module is configured to send the first shared key to the ECU.

In a possible implementation, the processing module is specifically configured to encrypt the first shared key to obtain an encrypted first shared key. The transceiver module is specifically configured to send the encrypted first shared key to the ECU.

In a possible implementation, the transceiver module is further configured to send the first shared key to the diagnostic apparatus.

In a possible implementation, the transceiver module is specifically configured to receive a first signature and a first public key infrastructure PKI certificate from the diagnostic apparatus, where the first signature is obtained by signing, by using a private key of the diagnostic apparatus, a first random number generated by the diagnostic apparatus. The processing module is specifically configured to: if successfully checking the first PKI certificate, obtain a public key of the diagnostic apparatus; and check the first signature by using the public key of the diagnostic apparatus.

In a possible implementation, the processing module is specifically configured to: generate a second random number, and generate the first shared key based on the first random number and the second random number, where the first random number is obtained after the gateway successfully checks the first signature by using the public key of the diagnostic apparatus.

In a possible implementation, the transceiver module is further configured to send the second random number to the diagnostic apparatus, where the second random number is used by the diagnostic apparatus to generate the first shared key based on the first random number and the second random number.

In a possible implementation, the processing module is further configured to sign the second random number by using a private key of the gateway, to obtain a second signature. The transceiver module is further configured to send a second PKI certificate and the second signature to the diagnostic apparatus, where the second PKI certificate and the second signature are used by the diagnostic apparatus to perform authentication on the gateway.

In a possible implementation, the transceiver module is specifically configured to receive a first public key infrastructure PKI certificate from the diagnostic apparatus. The processing module is specifically configured to: if successfully checking the first PKI certificate, obtain a public key of the diagnostic apparatus; and generate a first challenge. The transceiver module is further configured to: send the first challenge to the diagnostic apparatus, and receive a third signature from the diagnostic apparatus, where the third signature is obtained by signing the first challenge by using a private key of the diagnostic apparatus. The processing module is further configured to check the third signature by using the public key of the diagnostic apparatus.

In a possible implementation, the transceiver module is further configured to receive a second challenge from the diagnostic apparatus. The processing module is further configured to sign the second challenge by using a private key of the gateway, to obtain a fourth signature. The transceiver module is further configured to send the fourth signature and a second PKI certificate to the diagnostic apparatus, where the second PKI certificate and the fourth signature are used by the diagnostic apparatus to perform authentication on the gateway.

When the gateway is configured to implement the function in the fourth aspect, for beneficial effects thereof, refer to the descriptions in the fourth aspect. Details are not described herein again. The processing module is configured to perform authentication on a diagnostic apparatus, where the diagnostic apparatus is configured to make diagnosis on the vehicle. If the authentication succeeds, the transceiver module is configured to send a first message to the ECU. The first message is used to indicate the ECU to generate a first shared key. The first shared key is a key shared between the ECU and the diagnostic apparatus, and the first shared key is used by the ECU to encrypt to-be-transmitted diagnostic data.

In a possible implementation, the transceiver module is specifically configured to receive a first public key infrastructure PKI certificate from the diagnostic apparatus. The processing module is specifically configured to: if successfully checking the first PKI certificate, obtain a public key of the diagnostic apparatus; and generate a third challenge. The transceiver module is specifically configured to: send the third challenge to the diagnostic apparatus, and receive a fifth signature from the diagnostic apparatus, where the fifth signature is obtained by signing the third challenge by using a private key of the diagnostic apparatus. The processing module is specifically configured to check the fifth signature by using the public key of the diagnostic apparatus.

In a possible implementation, the transceiver module is further configured to: if the authentication performed on the diagnostic apparatus succeeds, send, to the diagnostic apparatus, a third random number that comes from the ECU; and send, to the ECU, a fourth random number that comes from the diagnostic apparatus, where the third random number and the fourth random number are used by the ECU to generate the first shared key and used by the diagnostic apparatus to generate the first shared key.

In another possible implementation, the apparatus may alternatively be a diagnostic apparatus. The apparatus may include a transceiver module and a processing module. When the diagnostic apparatus may be configured to implement the function in the second aspect, for beneficial effects thereof, refer to the descriptions in the second aspect. Details are not described herein again. The processing module is configured to: perform authentication on a gateway; and if the authentication succeeds, obtain a first shared key. The first shared key is a key shared between the ECU and the diagnostic apparatus. The apparatus is configured to make diagnosis on the vehicle. The transceiver module is configured to receive diagnostic data that has been encrypted by using the first shared key and that comes from the ECU. The processing module is further configured to decrypt the encrypted diagnostic data by using the first shared key.

In a possible implementation, the processing module is specifically configured to generate the first shared key, or the transceiver module is specifically configured to receive the first shared key from the gateway.

In a possible implementation, the transceiver module is specifically configured to receive a second PKI certificate and a second signature from the gateway, where the second signature is obtained by signing, by using a private key of the gateway, a second random number generated by the gateway. The processing module is specifically configured to: if successfully checking the second PKI certificate, obtain a public key of the gateway; and check the second signature by using the public key of the gateway.

In a possible implementation, the processing module is specifically configured to: if successfully checking the second signature, obtain the second random number; generate a first random number; and generate the first shared key based on the second random number and the first random number.

In a possible implementation, the transceiver module is specifically configured to receive the second random number from the gateway. The processing module is specifically configured to: generate a first random number; and generate the first shared key based on the second random number and the first random number.

In a possible implementation, the processing module of the apparatus is further configured to: generate the first random number, and sign the first random number by using a private key of the diagnostic apparatus, to obtain a first signature. The transceiver module is further configured to send the first signature and a first public key infrastructure PKI certificate to the gateway, where the first PKI certificate and the first signature are used by the gateway to perform authentication on the diagnostic apparatus.

In a possible implementation, the processing module is specifically configured to generate a second challenge. The transceiver module is specifically configured to: send the second challenge to the gateway; and receive a fourth signature and a second public key infrastructure PKI certificate from the gateway, where the fourth signature is obtained by signing the second challenge by using a private key of the gateway. The processing module is further configured to: if successfully checking the second PKI certificate, obtain a public key of the gateway; and check the fourth signature by using the public key of the gateway.

In a possible implementation, the transceiver module is further configured to receive a first challenge from the gateway. The processing module is further configured to sign the first challenge by using a public key of the diagnostic apparatus, to obtain a third signature. The transceiver module is further configured to send the third signature and a first PKI certificate to the gateway, where the third signature and the first PKI certificate are used by the gateway to perform authentication on the diagnostic apparatus.

According to a tenth aspect, this application provides a vehicle. The vehicle includes a gateway and an ECU. The gateway is configured to perform any method performed on a gateway side in the third aspect, and the ECU is configured to perform any method performed on an ECU side in the third aspect. Alternatively, it can be understood that, the gateway is configured to perform any method performed by the gateway in the first aspect, and the ECU is configured to perform any method performed by the ECU in the third aspect. Alternatively, it can be understood that, the vehicle includes any apparatus in the eighth aspect and the ECU. The ECU encrypts to-be-transmitted diagnostic data by using a first shared key that comes from the apparatus, and sends encrypted diagnostic data to a diagnostic apparatus.

According to an eleventh aspect, this application provides a vehicle. The vehicle includes a gateway and an ECU. The gateway is configured to perform any method performed on a gateway side in the fifth aspect, and the ECU is configured to perform any method performed on an ECU side in the fifth aspect. Alternatively, it can be understood that, the vehicle includes any apparatus in the eighth aspect and the ECU. The ECU generates a first shared key based on a first message that comes from the apparatus, encrypts to-be-transmitted diagnostic data by using the first shared key, and sends encrypted diagnostic data to a diagnostic apparatus.

According to a twelfth aspect, this application provides a diagnostic system. The diagnostic system includes a vehicle and a diagnostic apparatus. The diagnostic apparatus may be configured to perform the method in any one of the second aspect or the possible implementations of the second aspect, and the vehicle may be configured to perform the method in any one of the third aspect or the possible implementations of the third aspect.

According to a thirteenth aspect, this application provides a diagnostic system. The diagnostic system includes a vehicle and a diagnostic apparatus. The vehicle may be configured to perform the method in any one of the fifth aspect or the possible implementations of the fifth aspect.

According to a fourteenth aspect, this application provides a computer-readable storage medium. The computer-readable storage medium stores computer programs or instructions. When the computer programs or instructions are executed by an apparatus, the apparatus is enabled to perform the method in any one of the first aspect or the possible implementations of the first aspect; or the apparatus is enabled to perform the method in any one of the second aspect or the possible implementations of the second aspect; or the apparatus is enabled to perform the method in any one of the third aspect or the possible implementations of the third aspect; or the apparatus is enabled to perform the method in any one of the fourth aspect or the possible implementations of the fourth aspect; or the apparatus is enabled to perform the method in any one of the fifth aspect or the possible implementations of the fifth aspect; or the apparatus is enabled to perform the method in any one of the sixth aspect or the possible implementations of the sixth aspect; or the apparatus is enabled to perform the method in any one of the seventh aspect or the possible implementations of the seventh aspect.

According to a fifteenth aspect, this application provides a computer program product. The computer program product includes computer programs or instructions. When the computer programs or instructions are executed by an apparatus, the apparatus is enabled to perform the method in any one of the first aspect or the possible implementations of the first aspect; or the apparatus is enabled to perform the method in any one of the second aspect or the possible implementations of the second aspect; or the apparatus is enabled to perform the method in any one of the third aspect or the possible implementations of the third aspect; or the apparatus is enabled to perform the method in any one of the fourth aspect or the possible implementations of the fourth aspect; or the apparatus is enabled to perform the method in any one of the fifth aspect or the possible implementations of the fifth aspect; or the apparatus is enabled to perform the method in any one of the sixth aspect or the possible implementations of the sixth aspect; or the apparatus is enabled to perform the method in any one of the seventh aspect or the possible implementations of the seventh aspect.

### BRIEF DESCRIPTION OF DRAWINGS

FIG. 1a is a schematic architectural diagram of a diagnostic tester according to this application;
FIG. 1b is a schematic diagram of an E/E architecture according to this application;
FIG. 2a is a schematic diagram of a communications system according to this application;
FIG. 2b is a schematic diagram of a process in which a diagnostic tester makes fault diagnosis on a vehicle according to this application;
FIG. 3 is a schematic method flowchart of a fault diagnosis method according to this application;
FIG. 4a is a schematic flowchart of a method for performing authentication by a gateway on a diagnostic apparatus according to this application;
FIG. 4b is a schematic flowchart of another method for performing authentication by a gateway on a diagnostic apparatus according to this application;
FIG. 5 is a schematic method flowchart of a fault diagnosis method for a vehicle according to this application;
FIG. 6a is a schematic flowchart of a method for performing authentication by a diagnostic apparatus on a gateway according to this application;
FIG. 6b is a schematic flowchart of another method for performing authentication by a diagnostic apparatus on a gateway according to this application;
FIG. 7 is a schematic method flowchart of another fault diagnosis method according to this application;
FIG. 8 is a schematic flowchart of still another method for performing authentication by a diagnostic apparatus on a gateway according to this application;
FIG. 9A and FIG. 9B are a schematic method flowchart of still another fault diagnosis method according to this application;
FIG. 10A and FIG. 10B are a schematic method flowchart of still another fault diagnosis method according to this application;
FIG. 11A and FIG. 11B are a schematic method flowchart of still another fault diagnosis method according to this application;
FIG. 12A and FIG. 12B are a schematic method flowchart of still another fault diagnosis method according to this application;
FIG. 13 is a schematic structural diagram of an apparatus according to this application; and
FIG. 14 is a schematic structural diagram of an apparatus according to this application.

### DESCRIPTION OF EMBODIMENTS

The following describes in detail the embodiments of this application with reference to accompanying drawings.

In the following, some terms and processes in this application are described, so as to help a person skilled in the art have a better understanding.

### (1) Diagnostic apparatus

A diagnostic apparatus is a specialized instrument or system specially used for vehicle detection (or diagnosis). In other words, the diagnostic apparatus may be configured to obtain information about a vehicle. For example, the diagnostic apparatus may be configured to detect performance of the vehicle, and may obtain performance information of the vehicle. For another example, the diagnostic apparatus may be configured to make fault diagnosis on the vehicle, and may obtain diagnostic data of the vehicle. The diagnostic apparatus can make diagnosis on the vehicle by using developed diagnostic software. Alternatively, it can be understood that any apparatus installed with diagnostic software can be construed as a diagnostic apparatus, for example, a personal computer (personal computer, PC), a tablet computer, or a special-purpose device that is installed with diagnostic tester software. The special-purpose is, for example, a diagnostic tester (diagnostics tester, DT). The DT may also be referred to as a tester, a vehicle diagnostic tester, or a diagnostic unit. Further, the diagnostic apparatus may present a variety of diagnostic information in a form of a graphical interface.

The following details a structure and a working principle of a diagnostic apparatus by using an example in which the diagnostic apparatus is a diagnostic tester.

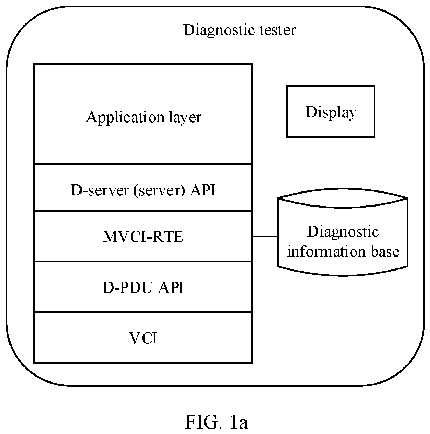

FIG. 1a shows a standard-architecture diagnostic tester formulated by the association for standardization of automation and measuring systems (association for standardization of automation and measuring systems, ASAM). As shown in FIG. 1a, the diagnostic tester includes an application layer, a diagnostic server application programming interface (diagnostic server API, D-server API), a modular vehicle communication interface (modular vehicle communication interface, MVCI) runtime system (MVCI runtime system) (MVCI-RTE), a diagnostic protocol data unit application programming interface (diagnostic protocol data unit API, D-PDU API), a vehicle communication interface (vehicle communication interface, VCI), a diagnostic information base, and a display. The application layer may implement an upper-layer diagnostic function, for example, implement a function of fault reading in the diagnostic tester or implement a test case in test equipment. The D-server API is an interface between the application layer and the MVCI-RTE, and is defined by ISO in a standardized manner. The MVCI-RTE is responsible for converting a function of the application layer into a diagnostic request; or after receiving a diagnostic response, interacting with the diagnostic information base (for example, an open diagnostic data format (open diagnostic data exchange, ODX) database), to resolve the diagnostic response into data in an application-layer format and transfer the data to the application layer. The diagnostic information base may store a correspondence between a DTC and description information of the DTC, and a correspondence between DTC fault information and description information of the DTC fault information. For example, if the DTC obtained by the diagnostic tester from a vehicle (for example, an on-board diagnostic system) is xxyyzzcc, the diagnostic tester may convert "xxyyzzcc" into an "engine fault" or the like by querying the diagnostic information base. The diagnostic information base is a database, and may be deployed locally or may be deployed at a remote end (for example, on a cloud side). The D-PDU API is an interface between the MVCI-RTE and the VCI, and is defined by ISO in a standardized manner. The VCI is a hardware interface between the diagnostic tester and an external device, and implements data transmission between different signal carriers. The display may usually include a display interface that may be configured to display a diagnostic result.

### (2) On-board diagnostic system (on-board diagnostic system, OBD)

An OBD is usually installed in a vehicle, and may be configured to: record in real time a fault that occurs in a driving process of the vehicle, where the fault is usually recorded in a form of a diagnostic trouble code (diagnostic trouble codes, DTC); and record snapshot information and the like of the vehicle when the fault occurs, where the snapshot information corresponding to the fault is information or data that is recorded at a moment at which the fault occurs and that is used to analyze a fault cause. An interface for communication between the OBD and the diagnostic tester may be referred to as an OBD port.

### (3) Electronic control unit (electronic control unit, ECU)

An ECU may also be referred to as a "trip computer", a "vehicle-mounted computer", a "vehicle-dedicated microcontroller", or a "lower computer", and is one of core elements of a vehicle. The ECU may include large-scale integrated circuits such as a microprocessor, a memory, an input/output interface, an analog-to-digital converter, a shaping circuit, and a drive circuit.

### (4) Unified diagnostic service (unified diagnostic service, UDS) protocol

The UDS protocol, namely, the International Organization for Standardization (international organization for standardization, ISO)-14229, is an application-layer protocol and a diagnostic service specification standard, and gives standardized definitions for all diagnostic commands. For example, the UDS protocol defines message formats of a diagnostic request (diagnostic request) and a diagnostic response (diagnostic response). The UDS protocol may be implemented over a plurality of protocols. For example, 14229-5 defines: The UDS protocol may be implemented over an internet protocol (internet protocol, IP) as (diagnostic over internet protocol, DoIP). For another example, 14229-3 defines: The UDS protocol is implemented over a controller area network (controller area network, CAN) bus.

### (5) Automotive open system architecture (automotive open system architecture, AUTOSAR)

The AUTOSAR is an open and standardized software architecture jointly established by global vehicle manufacturers, component suppliers, and electronic software system companies. The AUTOSAR mainly has the following features: a. The AUTOSAR is dedicated to resolving a difficulty in software development caused because hardware platforms are different, so that a developer can focus on innovation in software functions of a vehicle. b. The AUTOSAR provides a standard software interface definition, so that an engineer can allocate a required software component to an ECU of the vehicle depending on an actual requirement, thereby implementing reusability of the standard software component. c. An application-layer software component of the AUTOSAR is independent of hardware, so that an application developer can specify details of various vehicle functions in application software, without concerning about a problem of incompatibility between a bottom-layer software service and a hardware interface.

### (6) Public key infrastructure (public key infrastructure, PKI) certificate

A PKI certificate is obtained through signature by a trusted third-party by using a private key of the trusted third-party. The trusted third-party may be, for example, a certificate authority (certificate authority, CA) or another trusted device (or system). In other words, the trusted third-party is an issuing authority of the PKI certificate, and performs online identity authentication, that is, handles an identification card, for each authorized user in a system. Whether two parties in communication are trustworthy can be confirmed by using the PKI certificate. In an authentication process of the PKI certificate, a signature is generated by a signer (for example, the CA) of the PKI certificate by using a private key of the signer, and a verifier may verify the signature by using a public key of the signer. The following two steps may be included. A first step is: The verifier checks the signature made by the CA on the PKI certificate, to determine, through check, that the PKI certificate is a valid certificate signed by the CA. In this way, the verifier can determine that the PKI certificate is real and valid. A second step is: The verifier may require the signer to sign a challenge, and the verifier may verify, by using the public key of the signer, the signature that is of the challenge and that is made by the signer. If the verification succeeds, it can be demonstrated to the verifier that the signer has the corresponding private key.

(7) Establishment of a Diffie-Hellman (Diffie-Hellman, DH) key: A process of establishing a standard Diffie-Hellman key between a user A and a user B is: The user A selects a random number a and calculates a DH element g^{a} of the random number a. The user B selects a random number b and calculates a DH element g^{b} of the random number b. The user A and the user B exchanges the DH elements, and then the user A calculates (g^{b})^{a} by using a and the user B calculates (g^{a})^{b} by using b. In this way, the user A and the user B establish a public key CommonSecret=g^{ab}. Further, a private key may be calculated by using this public key and a key derivation function. In consideration of g^{a} and g^{b}, other people cannot calculate g^{ab}. Therefore, security of the public key established in this manner is relatively high.

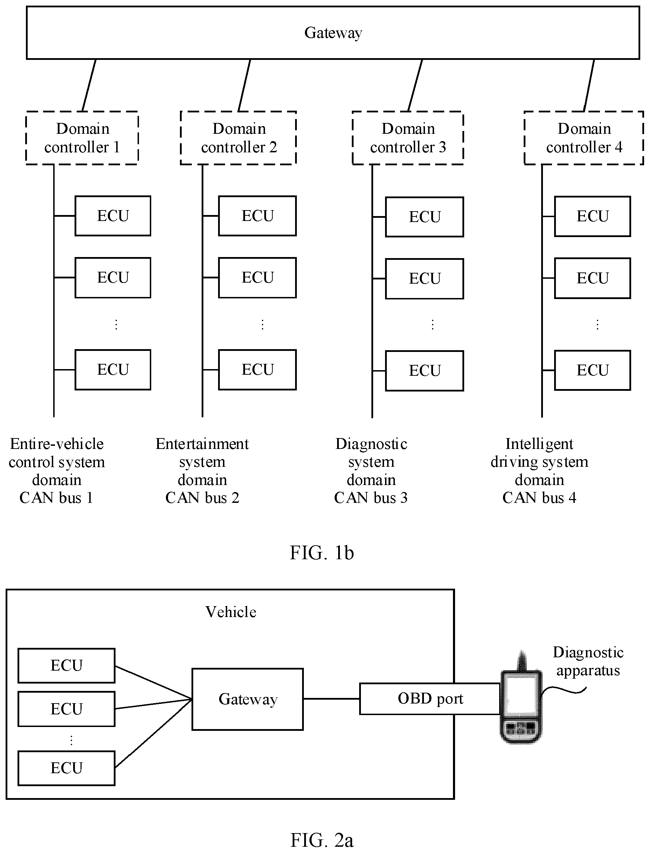

In this application, for example, a vehicle may use an electrical/electronic (electrical/electronic, E/E) architecture. As shown in FIG. 1b, an example is used for description in which the E/E architecture includes three levels: a gateway, domain controllers, and intra-domain ECUs. In the E/E architecture, a plurality of different domains may be obtained through division based on different functions, where each domain has a domain controller. The domain controller is configured to manage intra-domain ECUs. The intra-domain ECUs may be connected by using a controller area network (controller area network, CAN) bus, that is, the intra-domain ECUs may communicate with each other by using a CAN protocol. The gateway is a core part of an entire-vehicle architecture. As a pivot of data exchange in an entire-vehicle network, the gateway may perform, in different networks, routing on data of networks such as a CAN and a LIN, and is configured to manage domain controllers and intra-domain ECUs. For example, in FIG. 1b, the E/E architecture includes an entire-vehicle control system domain, an entertainment system domain, a diagnostic system domain, an intelligent driving system domain, a CAN bus 1, a CAN bus 2, a CAN bus 3, and a CAN bus 4. The CAN bus 1 may be corresponding to the entire-vehicle control system domain, the CAN bus 2 may be corresponding to the entertainment system domain, the CAN bus 3 may be corresponding to the diagnostic system domain, and the CAN bus 4 may be corresponding to the intelligent driving system domain.

It should be noted that FIG. 1b is merely a schematic diagram, and does not constitute any limitation on this application. For example, the E/E architecture may alternatively include two levels (for example, a gateway and ECUs). For another example, a quantity of domains and a quantity of intra-domain ECUs that are included in the E/E architecture may be greater or less than those shown in FIG. 1b. The system architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

FIG. 2a is a schematic diagram of a communications system according to this application. The communications system includes a diagnostic tester and a vehicle. The vehicle may use the architecture shown in FIG. 1b; and for details thereof, refer to the descriptions in FIG. 1b. For the tester, refer to the descriptions of the diagnostic apparatus described in (1). When fault diagnosis needs to be made on the vehicle, the tester may be connected to the vehicle by using an OBD port on the vehicle. The OBD port is directly connected to a gateway in an E/E architecture. In other words, the diagnostic apparatus is inserted to the OBD port on the vehicle to implement communication between the gateway and the diagnostic apparatus.

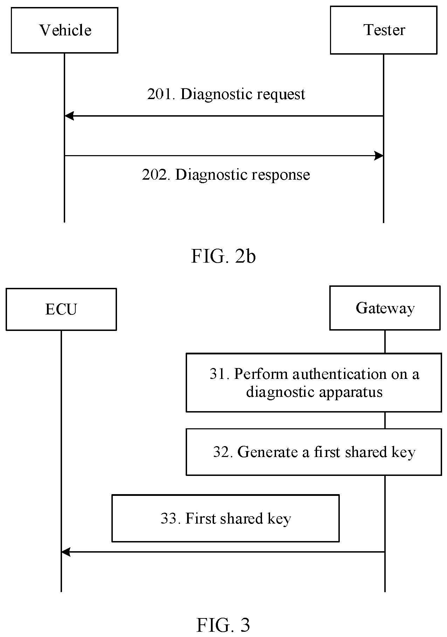

Based on the communications system shown in FIG. 2a, FIG. 2b briefly describes a process in which a diagnostic tester makes fault diagnosis on a vehicle. The process may include the following steps.

Step 201: The diagnostic tester sends a diagnostic request to the vehicle. Correspondingly, the vehicle receives the diagnostic request from the diagnostic tester.

Herein, the diagnostic request may include a service identifier.

The vehicle may obtain diagnostic data from an on-board diagnostic system based on the service identifier in the received diagnostic request.

Step 202: The vehicle sends a diagnostic response to the diagnostic tester. Correspondingly, the diagnostic tester receives the diagnostic response from the vehicle.

Herein, the diagnostic response may include the diagnostic data, for example, DTCs and fault information corresponding to the DTCs. A DTC and corresponding fault information are usually some values. Both the diagnostic request and the diagnostic response may usually be in formats defined in the UDS protocol. With reference to FIG. 1a, after receiving the DTC and the fault information corresponding to the DTC, the diagnostic tester may query a diagnostic information base of the diagnostic tester, obtain meanings or description information of the DTC and the fault information corresponding to the DTC, and display the descriptions on a display interface of a display. This is convenient for a user to view a fault cause.

In the foregoing diagnosis process, after the vehicle receives the diagnostic request from the diagnostic tester, to prevent an unauthorized diagnostic tester from obtaining the diagnostic data and then interfering with the vehicle, the diagnostic request usually needs to be sent to each ECU in a diagnostic system domain, and each ECU needs to check validity of the diagnostic tester. However, because resources of ECUs are limited, some ECUs possibly cannot perform authentication on the tester. As a result, an unauthorized tester may interfere with the vehicle. In addition, overheads of the ECUs are relatively high consequently.

In view of the foregoing problems, this application provides a fault diagnosis method. In the method, a gateway in a vehicle performs authentication on a diagnostic apparatus. This is conducive to avoiding interference of an unauthorized tester on the vehicle caused due to limited resources of ECUs in the vehicle. Moreover, a process of performing the authentication on the diagnostic apparatus is implemented by the gateway. This can reduce overheads of the ECUs.

In the following descriptions, a first PKI certificate is issued by a trusted third-party for the diagnostic apparatus, and a second PKI certificate is issued by the trusted third-party for the gateway. For the trusted third-party, refer to the descriptions of the trusted third-party described in (6). In addition, a first shared key is a key shared between an ECU and the diagnostic apparatus, and the first shared key is used by the ECU to encrypt to-be-transmitted diagnostic data. The diagnostic data is data to be transmitted by the EUC to the diagnostic apparatus. The diagnostic apparatus below may be the diagnostic tester shown in FIG. 1a, and may be configured to make diagnosis on the vehicle.

Referring to FIG. 3 below, FIG. 3 is a schematic method flowchart of a fault diagnosis method according to this application. The fault diagnosis method may be applied to a vehicle. The vehicle may include a gateway and an ECU, and the gateway is configured to manage the ECU. The fault diagnosis method is also applicable to the vehicle in the communications system shown in FIG. 2a. Further, the vehicle in the communications system may use the E/E architecture shown in FIG. 1b. The method includes the following steps.

Step 31: The gateway performs authentication on the diagnostic apparatus.

In a possible implementation, if the authentication performed by the gateway on the diagnostic apparatus succeeds, the gateway performs the following step 32. If the authentication performed by the gateway on the diagnostic apparatus fails, it indicates that the diagnostic apparatus is incapable of making diagnosis on the vehicle. In another possible implementation, if the authentication performed by the gateway on the diagnostic apparatus succeeds and the gateway receives a key establishment request from the diagnostic apparatus, the gateway performs step 32.

The following provides, by using examples, two manners of performing authentication by the gateway on the diagnostic apparatus.

First manner: The gateway performs authentication on the diagnostic apparatus based on a PKI certificate of the diagnostic apparatus and a signature of a random number of the diagnostic apparatus.

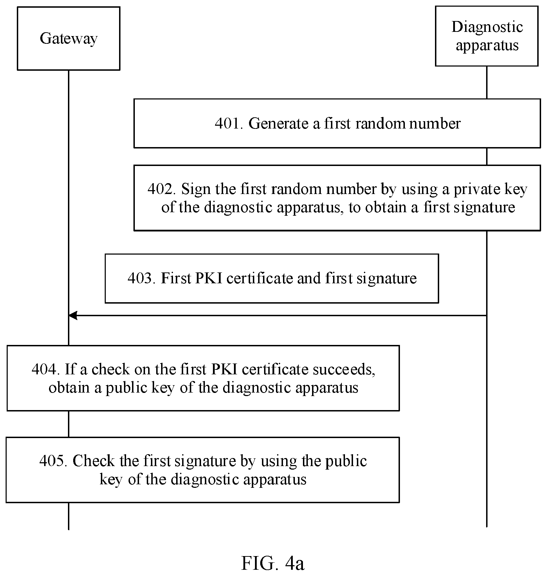

FIG. 4a is a schematic flowchart of a method for performing authentication by a gateway on a diagnostic apparatus according to this application. The authentication method includes the following steps.

Step 401: The diagnostic apparatus generates a first random number.

Step 402: The diagnostic apparatus signs the first random number by using a private key of the diagnostic apparatus, to obtain a first signature.

Step 403: The diagnostic apparatus sends the first signature and a first PKI certificate to the gateway. Correspondingly, the gateway receives the first signature and the first PKI certificate from the diagnostic apparatus.

The diagnostic apparatus may send the first signature and the first PKI certificate to the gateway together, or may separately send the first signature and the first PKI certificate to the gateway in twice. This is not limited in this application.

Step 404: The gateway checks the first PKI certificate. If the check succeeds, the gateway obtains a public key of the diagnostic apparatus, and then performs step 405. If the check fails, it indicates that authentication performed by the gateway on the diagnostic apparatus fails, and the gateway terminates processing and does not perform a subsequent step.

Step 405: The gateway checks the first signature by using the public key of the diagnostic apparatus.

Herein, if the gateway successfully checks the first signature, the gateway may determine that the first random number comes from the diagnostic apparatus. Alternatively, it can be understood that the gateway checks the first signature by using the public key of the diagnostic apparatus, and if the check succeeds, it indicates that authentication performed by the gateway on the diagnostic apparatus succeeds; or if the check fails, it indicates that authentication performed by the gateway on the diagnostic apparatus fails.

It can be learnt from step 401 to step 405 that, if the gateway successfully checks both the first PKI certificate and the first signature, it indicates that the authentication performed by the gateway on the diagnostic apparatus succeeds. If the gateway unsuccessfully checks any one of the first PKI certificate and the first signature, it indicates that the authentication performed by the gateway on the diagnostic apparatus fails, and in this case, the diagnostic apparatus is incapable of making diagnosis on the vehicle in which the gateway is located.

Second manner: The gateway performs authentication on the diagnostic apparatus based on a PKI certificate of the diagnostic apparatus and a challenge-response mechanism.

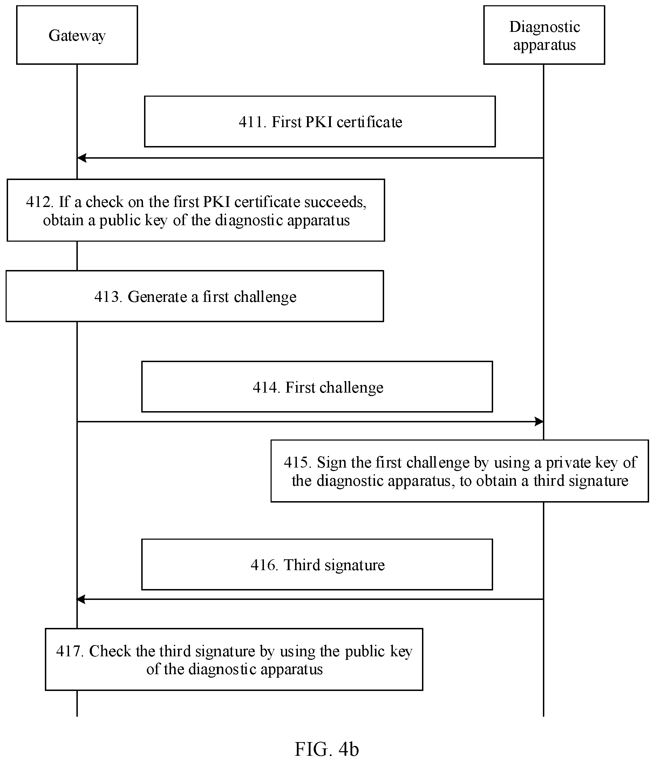

FIG. 4b is a schematic flowchart of another method for performing authentication by a gateway on a diagnostic apparatus according to this application. The authentication method includes the following steps.

Step 411: The diagnostic apparatus sends a first PKI certificate to the gateway. Correspondingly, the gateway receives the first PKI certificate from the diagnostic apparatus.

Step 412: The gateway checks the first PKI certificate. If the check succeeds, the gateway obtains a public key of the diagnostic apparatus, and then performs step 413. If the check fails, it indicates that authentication performed by the gateway on the diagnostic apparatus fails.

Step 413: The gateway generates a first challenge.

Step 414: The gateway sends the first challenge to the diagnostic apparatus. Correspondingly, the diagnostic apparatus receives the first challenge from the gateway.

Step 415: The diagnostic apparatus signs the first challenge by using a private key of the diagnostic apparatus, to obtain a third signature.

Step 416: The diagnostic apparatus sends the third signature to the gateway. Correspondingly, the gateway receives the third signature from the diagnostic apparatus.

Step 417: The gateway checks the third signature by using the public key of the diagnostic apparatus.

Herein, the gateway may check the third signature by using the public key of the diagnostic apparatus. If the check succeeds, the gateway may determine that the first challenge is sent by the diagnostic apparatus, and it may further indicate that authentication performed by the gateway on the diagnostic apparatus succeeds. If the check fails, it indicates that authentication performed by the gateway on the diagnostic apparatus fails.

It can be learnt from step 411 to step 417 that, if the gateway successfully checks both the first PKI certificate and the third signature, it indicates that the authentication performed by the gateway on the diagnostic apparatus succeeds. If the gateway unsuccessfully checks any one of the first PKI certificate and the third signature, it indicates that the authentication performed by the gateway on the diagnostic apparatus fails, and in this case, the diagnostic apparatus is incapable of making diagnosis on the vehicle in which the gateway is located.

Step 32: The gateway generates a first shared key.

Herein, the first shared key may also be referred to as a session key, and is a symmetric session key. Alternatively, it can be understood that the ECU and the diagnostic apparatus have a same key, that is, the first shared key. During data exchange between the ECU and the diagnostic apparatus, both the ECU and the diagnostic apparatus can encrypt exchanged diagnostic data by using the first shared key. This is conducive to improving security of the diagnostic data exchanged between the ECU and the diagnostic apparatus.

This application provides, by using examples, two implementations of generating the first shared key by the gateway.

First implementation: The gateway generates the first shared key based on the first random number and a second random number.

In a possible implementation, based on the foregoing first authentication manner, if the gateway successfully checks, by using the public key of the diagnostic apparatus, the first signature that comes from the diagnostic apparatus, the gateway may obtain the first random number, and the gateway may generate the first shared key based on the first random number and the generated second random number. In other words, after the authentication performed by the gateway on the diagnostic apparatus succeeds, the gateway may obtain the first random number. Further, the gateway generates the second random number, and generates the first shared key based on the first random number and the second random number.

For example, the gateway may generate the first shared key by using a Diffie-Hellman key. For example, the diagnostic apparatus generates a first random number a, calculates a DH element g^{a} of the first random number a, and signs the DH element g^{a} of the first random number a to obtain a first signature. After successfully checking the first signature, the gateway may obtain the DH element g^{a} of the first random number. The gateway generates a second random number b, and calculates a first shared key (g^{a})^{b}=g^{ab} based on the second random number b and the DH element g^{a} of the first random number a.

Optionally, to further improve security of the first shared key, the gateway may perform further calculation based on g^{ab} and a key derivation function (key derivation function, KDF) to obtain the first shared key. In other words, the first shared key is a private key of the gateway.

Second implementation: The gateway randomly generates a first shared key.

In a possible implementation, the gateway may generate a first shared key according to a key generation algorithm, for example, a KDF.

Step 33: The gateway sends the first shared key to the ECU. Correspondingly, the ECU receives the first shared key from the gateway.

In a possible implementation, the gateway may encrypt the first shared key by using a pre-shared key between the gateway and the ECU, to obtain an encrypted first shared key. Further, the gateway sends the encrypted first shared key to the ECU. Correspondingly, the ECU may decrypt the encrypted first shared key by using the stored pre-shared key, to obtain the first shared key.

In another possible implementation, the gateway may agree with the ECU on an encryption algorithm. The gateway encrypts the first shared key by using the agreed encryption algorithm, to obtain an encrypted first shared key. Further, the gateway sends the encrypted first shared key to the ECU. Correspondingly, the ECU may decrypt the encrypted first shared key by using the agreed encryption algorithm, to obtain the first shared key.

With reference to FIG. 1b, the gateway may send the encrypted first shared key to one or more ECUs in a fault diagnostic system of the vehicle, so that the diagnostic apparatus obtains the diagnostic data.

It can be learnt from step 31 to step 33 that, the gateway performs authentication on the diagnostic apparatus. This is conducive to avoiding interference of an unauthorized diagnostic apparatus on the vehicle. In addition, only the gateway performs authentication on the diagnostic apparatus, and there is no need to perform authentication on the diagnostic apparatus by all ECUs. This achieves higher efficiency of performing authentication on the diagnostic apparatus, and is also conducive to reducing overheads of the ECUs. Further, the gateway may generate the first shared key for the EUC. This is conducive to further reducing the overheads of the ECUs. The first shared key is used by the ECU to encrypt the to-be-transmitted diagnostic data. In this way, it is conducive to improving security of the diagnostic data transmitted by the ECU to the diagnostic apparatus, and even if the diagnostic data transmitted by the ECU to the diagnostic apparatus is stolen by an unauthorized device, the unauthorized device cannot obtain the real diagnostic data because the diagnostic data is ciphertext data that has been encrypted by using the first shared key.

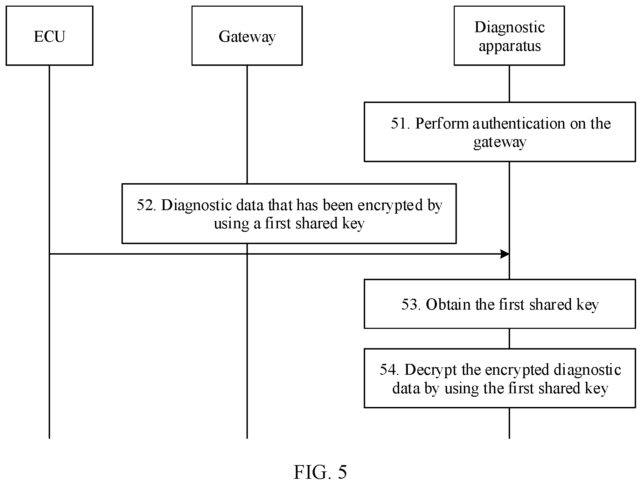

FIG. 5 is a schematic method flowchart of a fault diagnosis method for a vehicle according to this application. The fault diagnosis method is applicable to the communications system shown in FIG. 2a. Further, the vehicle in the communications system may use the E/E architecture shown in FIG. 1b. A diagnostic apparatus may be the diagnostic tester shown in FIG. 1a, and may be configured to make diagnosis on the vehicle. The method may include the following steps.

Step 51: The diagnostic apparatus performs authentication on a gateway.

Herein, if the authentication performed by the diagnostic apparatus on the gateway succeeds, the diagnostic apparatus performs the following step 52. If the authentication performed by the diagnostic apparatus on the gateway fails, the diagnostic apparatus may end a process of making diagnosis on the vehicle or re-initiate a diagnosis process.

The following provides, by using examples, two manners of performing authentication by the diagnostic apparatus on the gateway.

Manner 1: The diagnostic apparatus performs authentication on the gateway based on a PKI certificate of the gateway and a signature of a random number of the gateway.

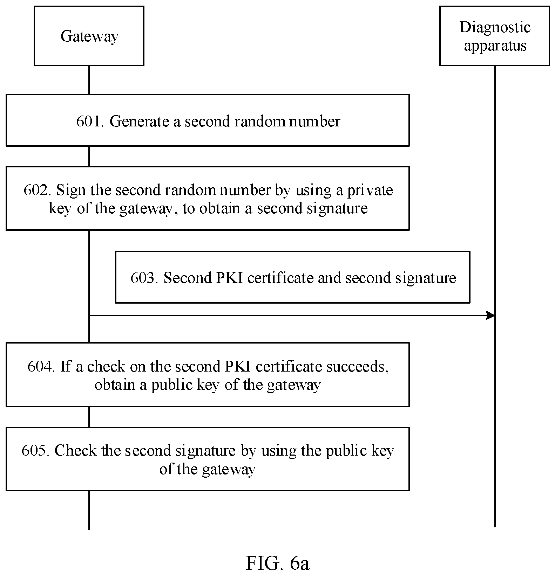

FIG. 6a is a schematic flowchart of a method for performing authentication by a diagnostic apparatus on a gateway according to this application. The authentication method includes the following steps.

Step 601: The gateway generates a second random number.

Step 602: The gateway signs the second random number by using a private key of the gateway, to obtain a second signature.

Step 603: The gateway sends a second PKI certificate and the second signature to the diagnostic apparatus. Correspondingly, the diagnostic apparatus receives the second PKI certificate and the second signature from the gateway.

Herein, the gateway may send the second PKI certificate and the second signature to the diagnostic apparatus together, or may separately send the second PKI certificate and the second signature to the diagnostic apparatus in twice.

Step 604: The diagnostic apparatus checks the second PKI certificate. If the check succeeds, the diagnostic apparatus obtains a public key of the gateway, and then performs step 605. If the check fails, it indicates that authentication performed by the diagnostic apparatus on the gateway fails.

Step 605: The diagnostic apparatus checks the second signature by using the public key of the gateway.

Herein, the diagnostic apparatus may check the second signature by using the public key of the gateway, and if the check succeeds, it indicates that authentication performed by the diagnostic apparatus on the gateway succeeds; or if the check fails, it indicates that authentication performed by the diagnostic apparatus on the gateway fails.

It can be learnt from step 601 to step 605 that, if the diagnostic apparatus successfully checks both the second PKI certificate and the second signature, it indicates that the authentication performed by the diagnostic apparatus on the gateway succeeds. If the diagnostic apparatus unsuccessfully checks any one of the second PKI certificate and the second signature, it indicates that the authentication performed by the diagnostic apparatus on the gateway fails.

It should be noted that two-way authentication between the gateway and the diagnostic apparatus can be implemented with reference to FIG. 4a and FIG. 6a.

Manner 2: The diagnostic apparatus performs authentication on the gateway based on a PKI certificate of the gateway and a challenge-response mechanism.

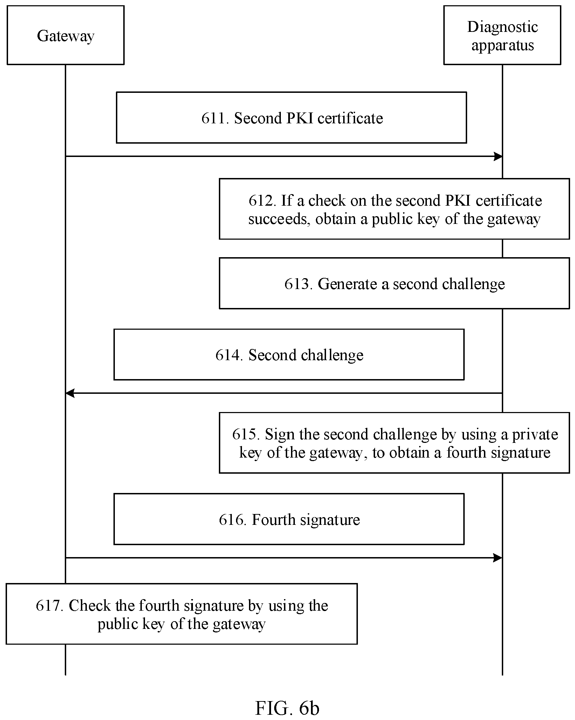

FIG. 6b is a schematic flowchart of another method for performing authentication by a diagnostic apparatus on a gateway according to this application. The authentication method includes the following steps.

Step 611: The gateway sends a second PKI certificate to the diagnostic apparatus. Correspondingly, the diagnostic apparatus receives the second PKI certificate from the gateway.

Step 612: The diagnostic apparatus checks the second PKI certificate. If the check succeeds, the diagnostic apparatus obtains a public key of the gateway, and then performs step 613. If the check fails, authentication performed by the diagnostic apparatus on the gateway fails.

Step 613: The diagnostic apparatus generates a second challenge.

Step 614: The diagnostic apparatus sends the second challenge to the gateway. Correspondingly, the gateway receives the second challenge from the diagnostic apparatus.

Step 615: The gateway signs the second challenge by using a private key of the gateway, to obtain a fourth signature.

Step 616: The gateway sends the fourth signature to the diagnostic apparatus. Correspondingly, the diagnostic apparatus receives the fourth signature from the gateway.

Step 617: The diagnostic apparatus checks the fourth signature by using the public key of the gateway.

Herein, the diagnostic apparatus may check the fourth signature by using the public key of the gateway, and if the check succeeds, it indicates that authentication performed by the diagnostic apparatus on the gateway succeeds; or if the check fails, it indicates that authentication performed by the diagnostic apparatus on the gateway fails.

It can be learnt from step 611 to step 617 that, if the diagnostic apparatus successfully checks both the second PKI certificate and the fourth signature, it indicates that the authentication performed by the diagnostic apparatus on the gateway succeeds. If the diagnostic apparatus unsuccessfully checks any one of the second PKI certificate and the fourth signature, it indicates that the authentication performed by the diagnostic apparatus on the gateway fails.

It should be noted that two-way authentication between the gateway and the diagnostic apparatus can be implemented with reference to FIG. 4b and FIG. 6b.

Step 52: The diagnostic apparatus receives diagnostic data that has been encrypted by using a first shared key and that comes from the ECU.

With reference to FIG. 2a, the ECU sends the encrypted diagnostic data to the gateway, and the gateway sends the encrypted diagnostic data to the diagnostic apparatus through an OBD port. Alternatively, it can be understood that the gateway transparently transmits, to the diagnostic apparatus, the encrypted diagnostic data that comes from the ECU.

Step 53: The diagnostic apparatus obtains the first shared key.

Herein, for descriptions of the first shared key, refer to the descriptions of the first shared key in step 32. Details are not described herein again.

In a possible implementation, the diagnostic apparatus may generate the first shared key. Further, optionally, the diagnostic apparatus may receive the second random number from the gateway, and generate the first shared key based on the second random number and a generated first random number.

Alternatively, based on the foregoing manner 1, after successfully checking the second signature, the diagnostic apparatus may obtain the second random number. The gateway generates the first shared key based on the second random number and a generated first random number. For example, the diagnostic apparatus may generate the first shared key by using a Diffie-Hellman key. For example, the gateway generates a second random number b, calculates a DH element g^{b} of the second random numberb, and signs the DH element g^{b} of the second random number b to obtain a second signature. After successfully checking the second signature, the diagnostic apparatus may obtain the DH element g^{b} of the second random number. The diagnostic apparatus generates a first random number a, and may calculate a first shared key (g^{b})^{a}=g^{ab} based on the first random number a and the DH element g^{b} of the second random number b.

Optionally, to further improve security of the first shared key, the diagnostic apparatus may perform further calculation based on g^{ab} and a key derivation function (key derivation function, KDF) to obtain the first shared key. In other words, the first shared key is a private key of the diagnostic apparatus.

Alternatively, the diagnostic apparatus may receive the first shared key from the gateway. Further, optionally, to improve the security of the first shared key, the gateway may encrypt the first shared key by using a public key of the diagnostic apparatus, and send an encrypted first shared key to the diagnostic apparatus.

It should be noted that no limitation is imposed on a sequence between step 52 and step 53. Step 52 may be performed before step 53, step 53 may be performed before step 52, or step 52 and step 53 may be performed simultaneously.

Step 54: The diagnostic apparatus decrypts the encrypted diagnostic data by using the first shared key.

By using step 51 to step 54, the diagnostic apparatus performs authentication on the gateway. This is conducive to avoiding that the diagnostic apparatus is connected to an unauthorized device, thereby preventing the unauthorized device from arbitrarily sending data to the diagnostic apparatus. Further, the diagnostic data received by the diagnostic apparatus is diagnostic data that has been encrypted by the EUC by using the first shared key. In this way, it is conducive to improving security of the diagnostic data transmitted by the ECU to the diagnostic apparatus, and even if the diagnostic data transmitted by the ECU to the diagnostic apparatus is stolen by an unauthorized device, the unauthorized device cannot obtain the real diagnostic data because the diagnostic data is ciphertext data that has been encrypted by using the first shared key.

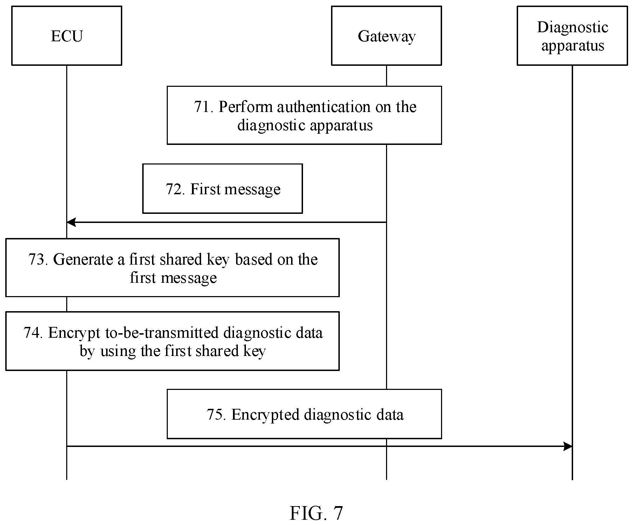

FIG. 7 is a schematic method flowchart of another fault diagnosis method according to this application. The fault diagnosis method may be applied to a vehicle. The vehicle may include a gateway and an ECU, and the gateway is configured to manage the ECU. The fault diagnosis method is also applicable to the communications system shown in FIG. 2a. Further, the vehicle in the communications system may use the E/E architecture shown in FIG. 1b. The method includes the following steps.

Step 71: The gateway performs authentication on a diagnostic apparatus.

Herein, if the authentication performed by the gateway on the diagnostic apparatus succeeds, the gateway performs the following step 32. If the authentication performed by the gateway on the diagnostic apparatus fails, it indicates that the diagnostic apparatus is incapable of making diagnosis on the vehicle, and subsequent steps may not be performed.

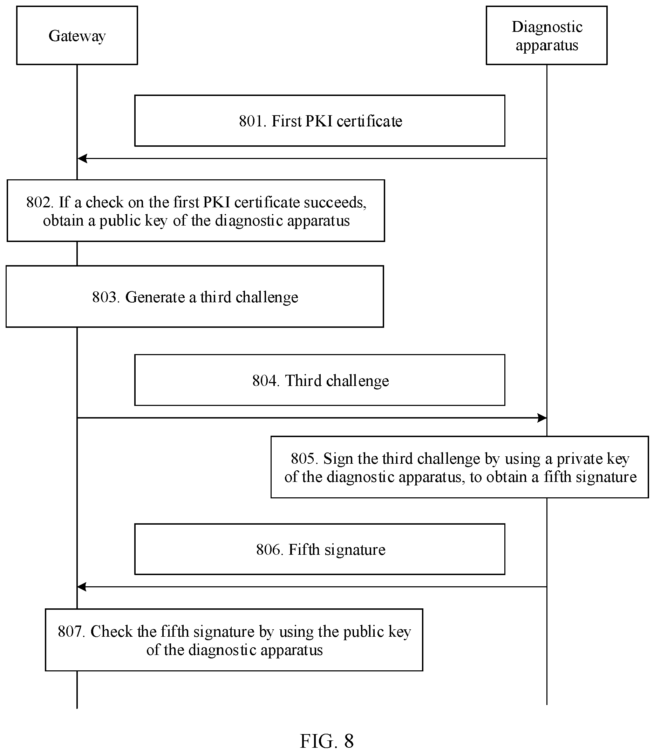

In a possible implementation, the gateway may perform authentication on the diagnostic apparatus based on a PKI certificate of the diagnostic apparatus and a challenge-response mechanism. For details thereof, refer to a process in which the diagnostic apparatus performs authentication on the gateway and that is shown in FIG. 8.

Step 801: The diagnostic apparatus sends a first PKI certificate to the gateway. Correspondingly, the gateway receives the first PKI certificate from the diagnostic apparatus.

Step 802: The gateway checks the first PKI certificate. If the check succeeds, the gateway obtains a public key of the diagnostic apparatus, and then needs to perform step 803. If the check fails, it indicates that authentication performed by the gateway on the diagnostic apparatus fails.

Step 803: The gateway generates a third challenge.

Herein, the third challenge may be the same as or different from a first challenge. This is not limited in this application.

Step 804: The gateway sends the third challenge to the diagnostic apparatus.

Step 805: The diagnostic apparatus signs the third challenge by using a private key of the diagnostic apparatus, to obtain a fifth signature.

Step 806: The diagnostic apparatus sends the fifth signature to the gateway. Correspondingly, the gateway receives the fifth signature from the diagnostic apparatus.

Step 807: The gateway checks the fifth signature by using the public key of the diagnostic apparatus.

If the gateway successfully checks the fifth signature, it indicates that authentication performed by the gateway on the diagnostic apparatus succeeds. If the check fails, it indicates that authentication performed by the gateway on the diagnostic apparatus fails.

It can be learnt from step 801 to step 807 that, if the gateway successfully checks both the first PKI certificate and the fifth signature, it indicates that the authentication performed by the gateway on the diagnostic apparatus succeeds. If the gateway unsuccessfully checks any one of the first PKI certificate and the fifth signature, it indicates that the authentication performed by the gateway on the diagnostic apparatus fails.

Step 72: The gateway sends a first message to the ECU.

Herein, the first message is used to indicate the ECU to generate a first shared key. It should be noted that the first message may be a notification message, may be an indication message, may be a request message, or may be an instruction message. To be specific, the first message is used to indicate the ECU to generate the first shared key, the first message may be used to notify the ECU that the ECU needs to generate the first shared key, or the first message is used to request the ECU to generate the first shared key.

Step 73: The ECU generates the first shared key based on the first message.

The following provides, by using examples, two implementations of generating the first shared key by the ECU based on the first message.

In a possible implementation, the diagnostic apparatus may generate a fourth random number, and send the fourth random number to the gateway. The gateway adds the fourth random number to the first message, and then sends the first message to the ECU. After receiving the first message, the ECU generates a third random number, and generates the first shared key based on the third random number and the fourth random number in the first message. Further, optionally, the ECU may send the third random number to the diagnostic apparatus through the gateway, and the diagnostic apparatus may generate the first shared key based on the third random number and the fourth random number.

Alternatively, it can be understood that, if the authentication performed by the gateway on the diagnostic apparatus succeeds, the gateway sends, to the diagnostic apparatus, the third random number that comes from the ECU; and sends, to the ECU, the fourth random number that comes from the diagnostic apparatus, where the fourth random number may be carried in the first message. The ECU may generate the first shared key based on the third random number and the fourth random number, and the diagnostic apparatus may also generate the first shared key based on the third random number and the fourth random number.

It should be noted that the foregoing manner of generating the first shared key by the ECU is used as an example. The fourth random number may alternatively not be carried in the first message. For example, after the authentication performed by the gateway on the diagnostic apparatus succeeds, the gateway may send the fourth random number and the first message to the ECU. After receiving the first message, the ECU may generate the first shared key based on the third random number and the fourth random number. For another example, after the authentication performed by the gateway on the diagnostic apparatus succeeds, the gateway may first send the first message to the ECU, and then send the fourth random number to the ECU. The first message may be a message on which the gateway and the ECU agree. For example, the first message may be represented by a 1-bit character or a digit.

Step 74: The ECU encrypts to-be-transmitted diagnostic data by using the first shared key.

Step 75: The ECU sends encrypted diagnostic data to the diagnostic apparatus.

It can be learnt from step 71 to step 75 that, the gateway performs authentication on the diagnostic apparatus. This is conducive to avoiding interference of an unauthorized diagnostic apparatus on the vehicle. In addition, only the gateway performs authentication on the diagnostic apparatus, and there is no need to perform authentication on the diagnostic apparatus by all ECUs. This achieves higher efficiency of performing authentication on the diagnostic apparatus, and is also conducive to reducing overheads of the ECUs. Further, it is conducive to improving security of the diagnostic data transmitted by the ECU to the diagnostic apparatus, and even if the diagnostic data transmitted by the ECU to the diagnostic apparatus is stolen by an unauthorized device, the unauthorized device cannot obtain the real diagnostic data because the diagnostic data is ciphertext data that has been encrypted by using the first shared key.

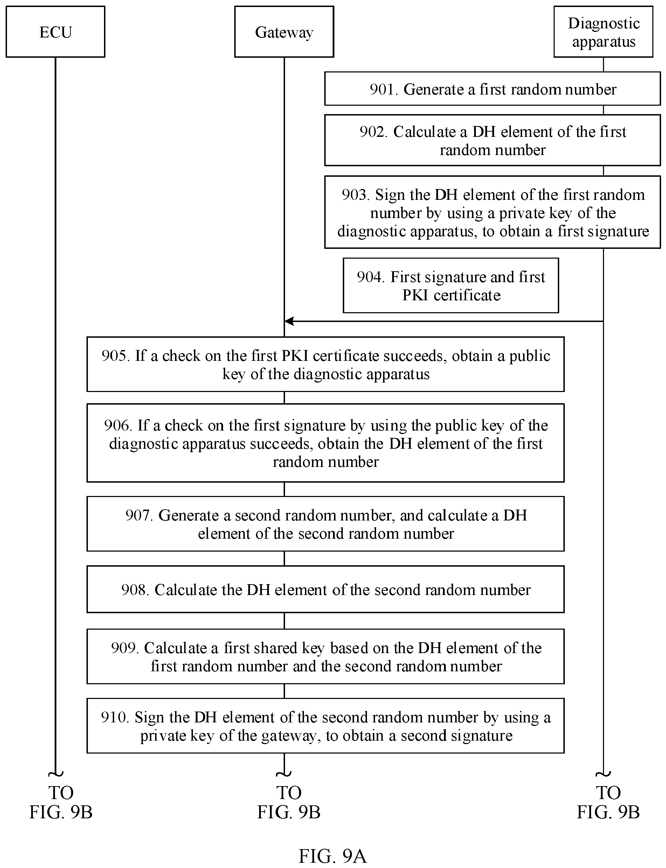

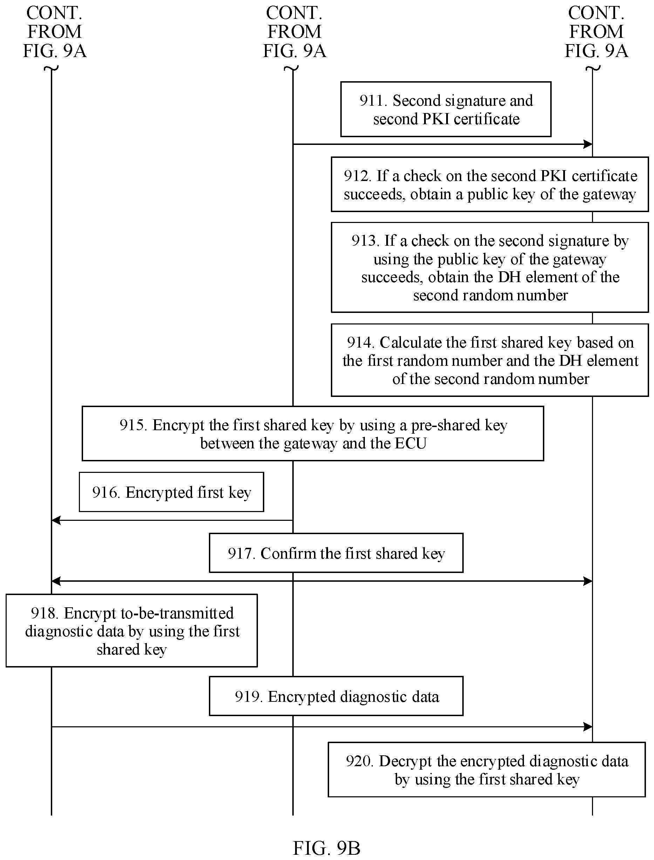

FIG. 9A and FIG. 9B are a schematic method flowchart of still another fault diagnosis method according to this application. The fault diagnosis method may be applied to a diagnostic system, where the diagnostic system may be the communications system shown in FIG. 2a. The diagnostic system includes a vehicle and a diagnostic apparatus. The vehicle may include a gateway and an ECU, and the gateway is configured to manage the ECU. The vehicle may use the E/E architecture shown in FIG. 1b. The diagnostic apparatus may be the diagnostic tester shown in FIG. 1a, and may be configured to make diagnosis on the vehicle. In the method, the gateway and the diagnostic apparatus may perform mutual authentication based on a PKI certificate and a signature of the other party. The gateway generates a first shared key for the ECU, and the diagnostic apparatus generates the first shared key. The method includes the following steps.

Step 901: The diagnostic apparatus generates a first random number.

Step 902: The diagnostic apparatus calculates a DH element of the first random number.

Step 902 is an optional step.

For example, the first random number is a, and the DH element of the first random number is g^{a}.

Step 903: The diagnostic apparatus signs the DH element of the first random number by using a private key of the diagnostic apparatus, to obtain a first signature.

Step 904: The diagnostic apparatus sends the first signature and a first PKI certificate to the gateway. Correspondingly, the gateway receives the first signature and the first PKI certificate from the diagnostic apparatus.

Step 905: The gateway checks the first PKI certificate. If the check succeeds, the gateway obtains a public key of the diagnostic apparatus, and then performs step 906. If the check fails, the gateway performs step 919.

Step 906: The gateway checks the first signature by using the public key of the diagnostic apparatus. If the check succeeds, the gateway obtains the DH element of the first random number, and then performs step 907. If the check fails, it indicates that authentication performed by the gateway on the diagnostic apparatus fails, and subsequent steps are not performed.

Step 907: The gateway generates a second random number.

Step 908: The gateway calculates a DH element of the second random number.

Step 908 is an optional step.

For example, the second random number is b, and the DH element of the second random number is g^{b}.

Step 909: The gateway calculates the first shared key based on the DH element of the first random number and the second random number.

For example, the second random number is b, and the DH element of the first random number is g^{a}. In this case, the first shared key may be (g^{a})^{b}=g^{ab}.

Step 910: The gateway signs the DH element of the second random number by using a private key of the gateway, to obtain a second signature.

No limitation is imposed on a sequence between step 908, step 909, and step 910. Step 908, step 909, and step 910 may be performed successively; or step 909, step 908, and step 910 may be performed successively; or step 910, step 908, and step 909 may be performed successively; or step 910, step 909, and step 908 may be performed successively; or step 908, step 909, and step 910 may be performed simultaneously.

Step 911: The gateway sends the second signature and a second PKI certificate to the diagnostic apparatus.

Step 912: The diagnostic apparatus checks the second PKI certificate. If the check succeeds, the diagnostic apparatus may obtain a public key of the gateway, and then perform step 913.

Step 913: The diagnostic apparatus checks the second signature by using the public key of the gateway. If the check succeeds, the diagnostic apparatus may obtain the DH element of the second random number, and then perform step 914. If the check fails, it indicates that authentication performed by the diagnostic apparatus on the gateway fails, and subsequent steps are not performed.

Step 914: The diagnostic apparatus calculates the first shared key based on the first random number and the DH element of the second random number.

For example, the first random number is a, and the DH element of the second random number is g^{b}. In this case, the first shared key may be (g^{b})^{a}=g^{ab}.

Step 915: The gateway encrypts the first shared key by using a pre-shared key between the gateway and the ECU.

Step 915 is an optional step.

Step 916: The gateway sends an encrypted first shared key to the ECU.

For step 916, refer to step 33. Details are not described herein again.

Step 917: The ECU and the diagnostic apparatus may perform key confirmation according to a key confirmation protocol.

For example, the ECU calculates a first MAC value of the first shared key, and sends the first MAC value to the diagnostic apparatus. The diagnostic apparatus calculates a second MAC value based on the first shared key. If the calculated second MAC value is consistent with the received first MAC value, the diagnostic apparatus may determine that the ECU has the first shared key. According to a same process, the ECU may also determine that the diagnostic apparatus has the same first shared key.

Step 918: The ECU encrypts to-be-transmitted diagnostic data by using the first shared key.

Step 919: The ECU may send encrypted diagnostic data to the diagnostic apparatus through the gateway. Correspondingly, the diagnostic apparatus may receive the encrypted diagnostic data from the ECU through the gateway.

Step 920: The diagnostic apparatus decrypts the encrypted diagnostic data by using the first shared key.

Two-way authentication between the gateway and the diagnostic apparatus can be implemented by using step 901 to step 920. Then, the gateway establishes the first shared key for the ECU. This is conducive to reducing overheads of the ECU. The ECU encrypts the to-be-transmitted diagnostic data by using the first shared key. In this way, security of the diagnostic data can be improved, and even if the diagnostic data is stolen by an unauthorized device, the unauthorized device cannot obtain the real diagnostic data because the diagnostic data is ciphertext diagnostic data.

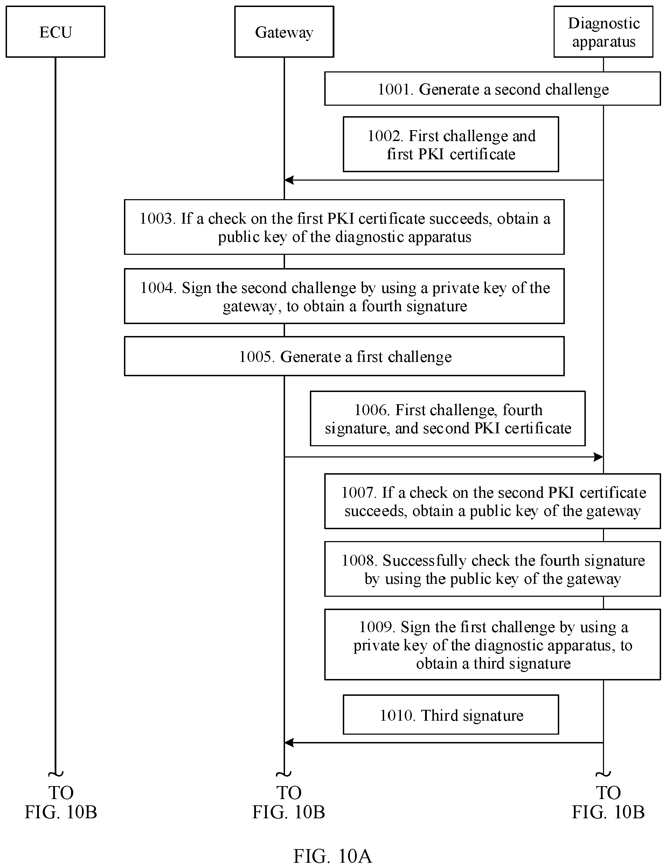

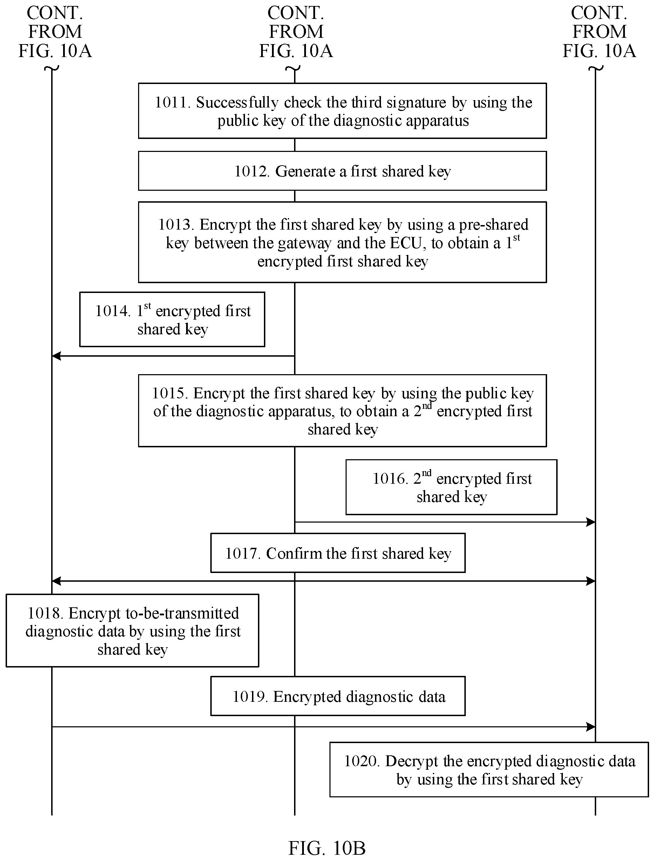

FIG. 10A and FIG. 10B are a schematic method flowchart of still another fault diagnosis method according to this application. The fault diagnosis method may be applied to a diagnostic system, where the diagnostic system may be the communications system shown in FIG. 2a. The diagnostic system includes a vehicle and a diagnostic apparatus. The vehicle may include a gateway and an ECU, and the gateway is configured to manage the ECU. The vehicle may use the E/E architecture shown in FIG. 1b. The diagnostic apparatus may be the diagnostic tester shown in FIG. 1a, and may be configured to make diagnosis on the vehicle. In the method, the gateway and the diagnostic apparatus may perform mutual authentication based on a PKI certificate of the other party and a challenge-response mechanism. The gateway may calculate a first shared key, and separately send the first shared key to the diagnostic apparatus and the ECU. The method may include the following steps.

Step 1001: The diagnostic apparatus generates a second challenge.

Step 1002: The diagnostic apparatus sends the second challenge and a first PKI certificate to the gateway. Correspondingly, the gateway receives the second challenge and the first PKI certificate from the diagnostic apparatus.

Step 1003: The gateway checks the first PKI certificate. If the check succeeds, the gateway obtains a public key of the diagnostic apparatus, and then performs step 1004. If the check fails, it indicates that authentication performed by the gateway on the diagnostic apparatus fails, and subsequent steps are not performed.

Step 1004: The gateway signs the second challenge by using a private key of the gateway, to obtain a fourth signature.

Step 1005: The gateway generates a first challenge.

Step 1006: The gateway sends the first challenge, the fourth signature, and a second PLI certificate to the diagnostic apparatus.

Herein, the gateway may send the first challenge, the fourth signature, and the second PLI certificate to the diagnostic apparatus together, or may separately send the first challenge, the fourth signature, and the second PLI certificate to the diagnostic apparatus in two or three times.

Step 1007: The diagnostic apparatus checks the second PKI certificate. If the check succeeds, the diagnostic apparatus may obtain a public key of the gateway, and then perform step 1008.

Step 1008: The diagnostic apparatus checks the fourth signature by using the public key of the gateway; and if the check succeeds, performs step 1009.

Step 1009: The diagnostic apparatus signs the first challenge by using a private key of the diagnostic apparatus, to obtain a third signature.

Step 1010: The diagnostic apparatus sends the third signature to the gateway. Correspondingly, the gateway receives the third signature from the diagnostic apparatus.

Step 1011: The gateway checks the third signature by using the public key of the diagnostic apparatus; and if the check succeeds, performs step 1012.

For step 1011, refer to the descriptions of step 417. Details are not described herein again.

Step 1012: The gateway generates the first shared key.

Herein, the gateway may randomly generate a first shared key according to a key generation algorithm.

Step 1013: The gateway encrypts the first shared key by using a pre-shared key between the gateway and the ECU, to obtain a 1^{st} encrypted first shared key.

Step 1014: The gateway sends the 1^{st} encrypted first shared key to the ECU. Correspondingly, the ECU receives the 1^{st} encrypted first shared key from the gateway.

Step 1015: The gateway may encrypt the first shared key by using the public key of the diagnostic apparatus, to obtain a 2^{nd} encrypted first shared key.

Step 1016: The gateway sends the 2^{nd} encrypted first shared key to the diagnostic apparatus. Correspondingly, the diagnostic apparatus receives the 2^{nd} encrypted first shared key from the gateway.

Step 1017: The ECU and the diagnostic apparatus may perform key confirmation according to a key confirmation protocol.

For step 1017, refer to the descriptions of step 817. Details are not described herein again.

Step 1018: The ECU encrypts to-be-transmitted diagnostic data by using the first shared key.

Step 1019: The ECU sends encrypted diagnostic data to the diagnostic apparatus. Correspondingly, the diagnostic apparatus receives the encrypted diagnostic data from the ECU.

Step 1020: The diagnostic apparatus may decrypt the encrypted diagnostic data by using the first shared key, to obtain the diagnostic data.

It should be noted that a sequence between the steps is merely used as an example. The gateway may first perform authentication on the diagnostic apparatus, and then the diagnostic apparatus may perform authentication on the gateway; or the diagnostic apparatus may first perform authentication on the gateway, and then the gateway may perform authentication on the diagnostic apparatus; or the diagnostic apparatus and the gateway may perform two-way authentication on each other simultaneously. This is not limited in this application.

Two-way authentication between the gateway and the diagnostic apparatus can be implemented by using step 1001 to step 1020. Then, the gateway generates the first shared key for the ECU and the diagnostic apparatus. This is conducive to reducing overheads of the ECU. The ECU encrypts the to-be-transmitted diagnostic data by using the first shared key. In this way, security of the diagnostic data can be improved, and even if the diagnostic data is stolen by an unauthorized device, the unauthorized device cannot obtain the real diagnostic data because the diagnostic data is ciphertext diagnostic data.

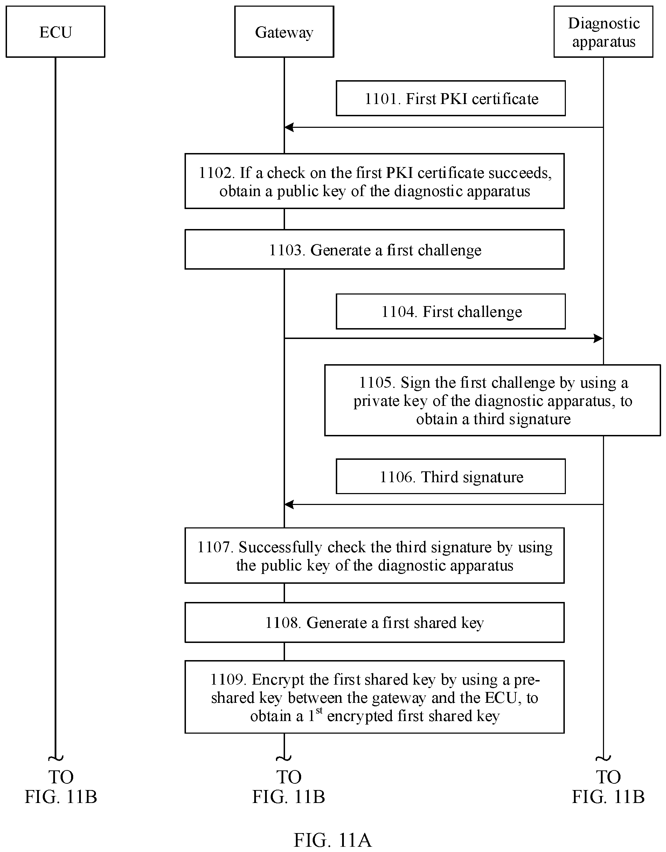

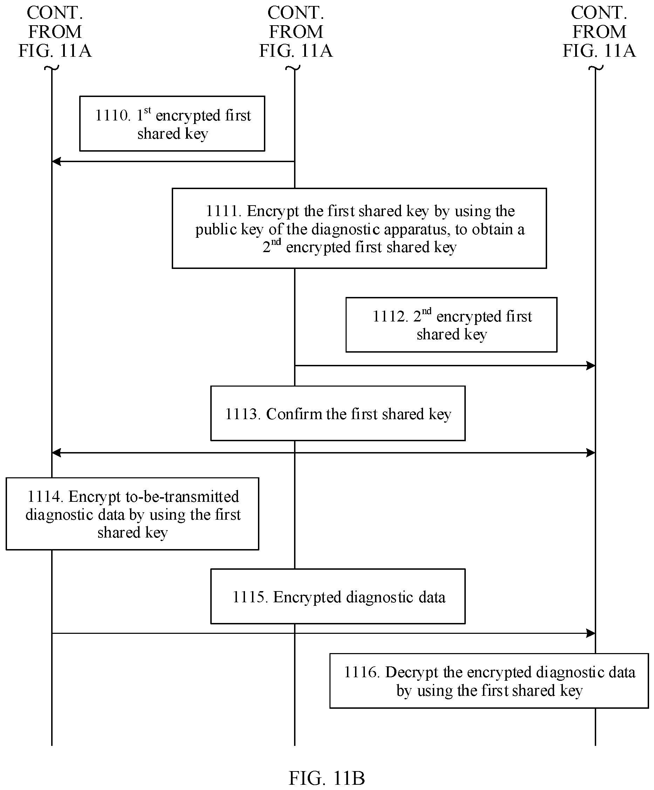

FIG. 11A and FIG. 11B are a schematic method flowchart of still another fault diagnosis method according to this application. The fault diagnosis method may be applied to a diagnostic system, where the diagnostic system may be the communications system shown in FIG. 2a. The diagnostic system includes a vehicle and a diagnostic apparatus. The vehicle may include a gateway and an ECU, and the gateway is configured to manage the ECU. The vehicle may use the E/E architecture shown in FIG. 1b. In the method, the gateway may perform one-way authentication on the diagnostic apparatus. The gateway generates a first shared key for the ECU and the diagnostic apparatus, and separately sends the first shared key to the ECU and the diagnostic apparatus. The method includes the following steps.

Step 1101: The diagnostic apparatus sends a first PKI certificate to the gateway.

Step 1102: The gateway checks the first PKI certificate. If the check succeeds, the gateway obtains a public key of the diagnostic apparatus, and then performs step 1103. If the check fails, it indicates that authentication performed by the gateway on the diagnostic apparatus fails, and subsequent steps are not performed.

Step 1103: The gateway generates a first challenge.

Step 1104: The gateway sends the first challenge to the diagnostic apparatus. Correspondingly, the diagnostic apparatus receives the first challenge from the gateway.

Step 1105: The diagnostic apparatus signs the first challenge by using a private key of the diagnostic apparatus, to obtain a third signature.

Step 1106: The diagnostic apparatus sends the third signature to the gateway. Correspondingly, the gateway receives the third signature from the diagnostic apparatus.

Step 1107: The gateway checks the third signature by using the public key of the diagnostic apparatus; and if the check succeeds, performs step 1108.

Step 1108: The gateway generates the first shared key.

Herein, the gateway may randomly generate a first shared key according to a key generation algorithm.

Step 1109: The gateway encrypts the first shared key by using a pre-shared key between the gateway and the ECU, to obtain a 1^{st} encrypted first shared key.

Step 1110: The gateway sends the 1^{st} encrypted first shared key to the ECU. Correspondingly, the ECU receives the 1^{st} encrypted first shared key from the gateway.

Step 1111: The gateway encrypts the first shared key by using the public key of the diagnostic apparatus, to obtain a 2^{nd} encrypted first shared key.

Step 1112: The gateway sends the 2^{nd} encrypted first shared key to the diagnostic apparatus. Correspondingly, the diagnostic apparatus receives the 2^{nd} encrypted first shared key from the gateway.

No limitation is imposed on a sequence between step 1100 and step 1111. Step 1111 may be performed before step 1100, step 1100 may be performed before step 1111, or step 1100 and step 1111 may be performed simultaneously.

Step 1113: The ECU and the diagnostic apparatus may perform key confirmation according to a key confirmation protocol.

For step 1113, refer to the descriptions of step 817. Details are not described herein again.

Step 1114: The ECU encrypts to-be-transmitted diagnostic data by using the first shared key.

Step 1115: The ECU sends encrypted diagnostic data to the diagnostic apparatus. Correspondingly, the diagnostic apparatus receives the encrypted diagnostic data from the ECU. Correspondingly, the diagnostic apparatus receives the encrypted diagnostic data from the ECU.

Step 1116: The diagnostic apparatus may decrypt the encrypted diagnostic data by using the first shared key, to obtain the diagnostic data.

For effects that are achieved in the solution in FIG. 11A and FIG. 11B, refer to the descriptions of the solution in FIG. 10A and FIG. 10B. Details are not described herein again.

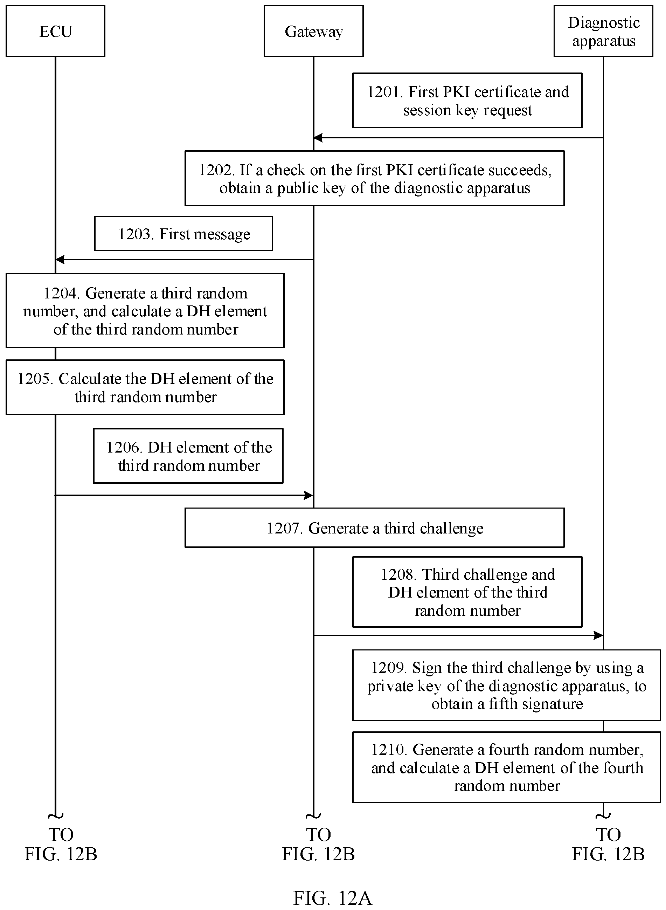

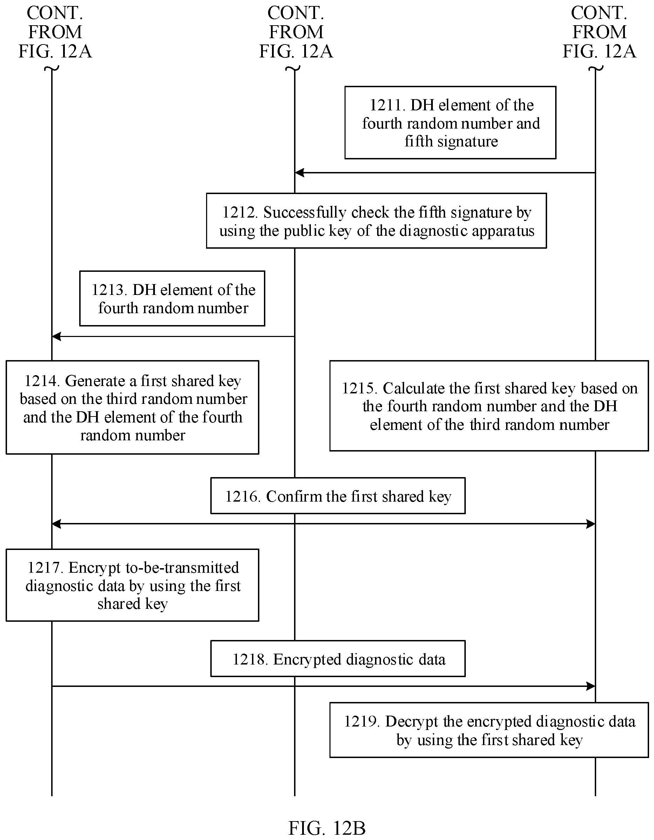

FIG. 12A and FIG. 12B are a schematic method flowchart of still another fault diagnosis method according to this application. A diagnostic system includes a vehicle and a diagnostic apparatus. The vehicle may include a gateway and an ECU, and the gateway is configured to manage the ECU. The vehicle may use the E/E architecture shown in FIG. 1b. The diagnostic apparatus may be the diagnostic tester shown in FIG. 1a, and may be configured to make diagnosis on the vehicle. In the method, the gateway may perform authentication on the diagnostic apparatus based on a PKI certificate of the diagnostic apparatus. The ECU and the diagnostic apparatus each may generate a first shared key. The method includes the following steps.

Step 1201: The diagnostic apparatus sends the first PKI certificate to the gateway. Correspondingly, the gateway receives the PKI certificate from the diagnostic apparatus.

Step 1202: The gateway checks the first PKI certificate. If the check succeeds, the gateway obtains a public key of the diagnostic apparatus, and then performs step 1203.

Step 1203: The gateway sends a first message to the ECU. Correspondingly, the ECU receives the first message from the gateway.

For step 1203, refer to the descriptions of step 602. Details are not described herein again.

Step 1204: After receiving the first message, the ECU generates a third random number.

Step 1205: The ECU calculates a DH element of the third random number.

Step 1206: The ECU sends the DH element of the third random number to the gateway. Correspondingly, the gateway receives the DH element of the third random number from the ECU.

Step 1207: The gateway generates a third challenge.

Step 1208: The gateway sends the third challenge and the DH element of the third random number to the diagnostic apparatus. Correspondingly, the diagnostic apparatus receives the third challenge and the DH element of the third random number from the gateway.

Step 1209: The diagnostic apparatus signs the third challenge by using a private key of the diagnostic apparatus, to obtain a fifth signature.

Step 1210: The diagnostic apparatus generates a fourth random number, and calculates a DH element of the fourth random number.

Step 1211: The diagnostic apparatus sends the DH element of the fourth random number and the fifth signature to the gateway.

Step 1212: The gateway checks the fifth signature by using the public key of the diagnostic apparatus; and if the check succeeds, performs step 1212.

Step 1213: The gateway sends the DH element of the fourth random number to the ECU.

Step 1214: The ECU generates the first shared key based on the third random number and the DH element of the fourth random number.

Step 1215: The diagnostic apparatus calculates the first shared key based on the fourth random number and the DH element of the third random number.

No limitation is imposed on a sequence between step 1214 and step 1215. Step 1214 may be performed before step 1215, step 1215 may be performed before step 1214, or step 1214 and step 1215 may be performed simultaneously.

Step 1216: The ECU and the diagnostic apparatus may perform key confirmation according to a key confirmation protocol.

For step 1216, refer to the descriptions of step 817. Details are not described herein again.

Step 1217: The ECU encrypts to-be-transmitted diagnostic data by using the first shared key.

Step 1218: The ECU sends encrypted diagnostic data to the diagnostic apparatus. Correspondingly, the diagnostic apparatus receives the encrypted diagnostic data from the ECU.

Step 1219: The diagnostic apparatus may decrypt the encrypted diagnostic data by using the first shared key, to obtain the diagnostic data.

For effects that are achieved in the solution in FIG. 12A and FIG. 12B, refer to the descriptions of the solution in FIG. 7. Details are not described herein again.

It should be noted that sequences between the steps in FIG. 9A and FIG. 9B to FIG. 12A and FIG. 12B are merely used as examples. Based on a specific fault diagnosis process, the sequences between the steps may be changed, or the steps may be performed simultaneously or the like. In addition, for brevity of description, for content in FIG. 9A and FIG. 9B to FIG. 12A and FIG. 12B that is the same as content in FIG. 3 to FIG. 8, refer to the descriptions in FIG. 3 to FIG. 8. Details are not described herein again.

It can be understood that, to implement the functions in the foregoing embodiments, the gateway and the diagnostic apparatus include corresponding hardware structures and/or software modules for performing the functions. A person of ordinary skill in the art should easily be aware that, in combination with the examples described in the embodiments disclosed in this application, modules, method steps may be implemented by hardware or a combination of hardware and computer software. Whether a function is performed by hardware or hardware driven by computer software depends on particular application scenarios and design constraints of the technical solutions.

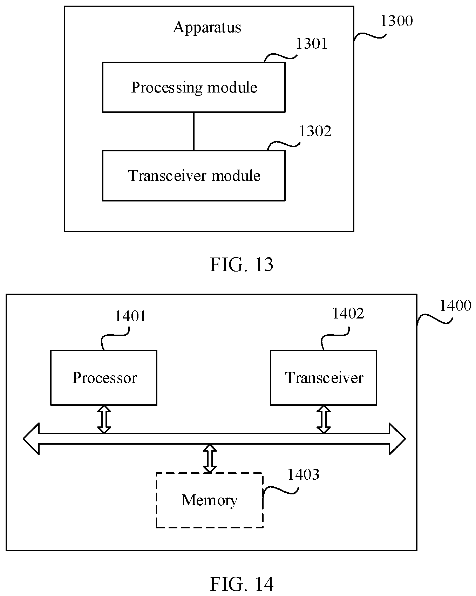

Based on the foregoing content and a same concept, FIG. 13 and FIG. 14 are possible schematic structural diagrams of apparatuses according to this application. These apparatuses may be configured to implement the functions of the gateway or the diagnostic apparatus in the foregoing method embodiments, and therefore can achieve the beneficial effects of the foregoing method embodiments. In this application, the apparatus may be the gateway in FIG. 1b, or may be the gateway in the vehicle shown in FIG. 2a.

As shown in FIG. 13, an apparatus 1300 includes a processing module 1301 and a transceiver module 1302. The apparatus 1300 is configured to implement the functions of the gateway or the diagnostic apparatus in the method embodiments shown in FIG. 3 to FIG. 12A and FIG. 12B.

When the apparatus 1300 is configured to implement the functions of the gateway in the method embodiment shown in FIG. 3, the processing module 1301 is configured to: perform authentication on a diagnostic apparatus; and if the authentication succeeds, generate a first shared key. The first shared key is a key shared between an ECU and the diagnostic apparatus, and the first shared key is used by the ECU to encrypt to-be-transmitted diagnostic data. The diagnostic apparatus is configured to obtain information about a vehicle. The transceiver module 1302 is configured to send the first shared key to the ECU.

For more detailed descriptions of the processing module 1301 and the transceiver module 1302, directly refer to related descriptions in the method embodiment shown in FIG. 3. Details are not described herein again.

When the apparatus 1300 is configured to implement the functions of the diagnostic apparatus in the method embodiment shown in FIG. 5, the processing module 1301 is configured to: perform authentication on a gateway; and if the authentication succeeds, obtain a first shared key. The first shared key is a key shared between an ECU and the diagnostic apparatus. The apparatus is configured to make diagnosis on a vehicle. The transceiver module 1302 is configured to receive diagnostic data that has been encrypted by using the first shared key and that comes from the ECU. The processing module 1301 is further configured to decrypt the encrypted diagnostic data by using the first shared key.

For more detailed descriptions of the processing module 1301 and the transceiver module 1302, directly refer to related descriptions in the method embodiment shown in FIG. 5. Details are not described herein again.

When the apparatus 1300 is configured to implement the functions of the gateway in the method embodiment shown in FIG. 7, the processing module 1301 is configured to perform authentication on a diagnostic apparatus, where the diagnostic apparatus is configured to obtain information about a vehicle. If the authentication succeeds, the transceiver module 1302 is configured to send a first message to an ECU. The first message is used to indicate the ECU to generate a first shared key. The first shared key is a key shared between the ECU and the diagnostic apparatus, and the first shared key is used by the ECU to encrypt to-be-transmitted diagnostic data.

For more detailed descriptions of the processing module 1301 and the transceiver module 1302, directly refer to related descriptions in the method embodiment shown in FIG. 7. Details are not described herein again.

It should be understood that in this embodiment of this application, the processing module 1301 may be implemented by a processor or a processor-related circuit component, and the transceiver module 1302 may be implemented by a transceiver or a transceiver-related circuit component.

Based on the foregoing content and a same concept, as shown in FIG. 14, this application further provides an apparatus 1400. The apparatus 1400 may include a processor 1401 and a transceiver 1402. The processor 1401 is coupled to the transceiver 1402. It can be understood that the transceiver 1402 may be an interface circuit or an input/output interface. Optionally, the apparatus 1400 may further include a memory 1403, configured to: store instructions to be executed by the processor 1401, store input data required for running instructions by the processor 1401, or store data that is generated after the processor 1401 runs instructions.

When the apparatus 1400 is configured to implement the method shown in FIG. 3, FIG. 5, or FIG. 7, the processor 1401 is configured to perform functions of the processing module 1301, and the transceiver 1402 is configured to perform functions of the transceiver module 1302.

Based on the foregoing content and a same concept, this application provides a vehicle. The vehicle may include a gateway and an ECU. The gateway may perform any method performed on a gateway side, and the ECU may perform any method performed on an ECU side. For possible implementations of the gateway and the ECU, refer to the foregoing descriptions. Details are not described herein again. For example, the vehicle may use the architecture shown in FIG. 2a.

Based on the foregoing content and a same concept, this application provides a diagnostic system. The diagnostic system may include the foregoing vehicle and diagnostic apparatus, and the vehicle includes a gateway and an ECU. The gateway may perform any method performed on a gateway side, and the diagnostic apparatus may perform any method performed on a diagnostic apparatus side. For possible implementations of the gateway and the diagnostic apparatus, refer to the foregoing descriptions. Details are not described herein again.

It should be noted that the processor in the embodiments of this application may be a central processing unit (Central Processing Unit, CPU), may be another general-purpose processor, a digital signal processor (Digital Signal Processor, DSP), an application-specific integrated circuit (Application Specific Integrated Circuit, ASIC), a field programmable gate array (Field-Programmable Gate Array, FPGA), or another programmable logic device, a transistor logic device, a hardware component, or any combination thereof. The general purpose processor may be a microprocessor or any regular processor or the like.

Methods or algorithm steps described in combination with the content disclosed in this embodiment of this application may be implemented by hardware, or may be implemented by a processor by executing software instructions. The software instructions may include a corresponding software module. The software module may be stored in a random access memory (Random Access Memory, RAM), a flash memory, a read-only memory (Read Only Memory, ROM), a programmable read only memory (Programmable ROM, PROM), an erasable programmable read only memory (Erasable Programmable ROM, EPROM), an electrically erasable programmable read only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a network device or a terminal device. Certainly, the processor and the storage medium may exist in network equipment as discrete components.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer programs or instructions. When the computer programs or instructions are loaded and executed on a computer, the procedures or functions in the embodiments of this application are performed completely or partially. The computer may be a general-purpose computer, a dedicated computer, a computer network, a network device, a user device, or other programmable apparatuses. The computer programs or instructions may be stored in a computer-readable storage medium or may be transmitted from a computer-readable storage medium to another computer-readable storage medium. For example, the computer programs or instructions may be transmitted from a website, computer, server, or data center to another website, computer, server, or data center in a wired or wireless manner. The computer storage medium may be any usable medium accessible by a computer, or a data storage device, such as a server or a data center, integrating one or more usable media. The usable medium may be a magnetic medium, for example, a floppy disk, a hard disk, or a magnetic tape; may be an optical medium, for example, a digital video disc (digital video disc, DVD); or may be a semiconductor medium, for example, a solid state drive (solid state drive, SSD).

In the embodiments of this application, unless special notes are made or there is a logical conflict, terms and/or descriptions between different embodiments are consistent and can be mutually referenced, and technical features in different embodiments can be combined into a new embodiment based on an inner logical relationship between the technical features.

It can be understood that various numbers in the embodiments of this application are merely used for differentiation for ease of description, but are not intended to limit the scope of the embodiments of this application. The sequence numbers of the foregoing processes do not mean execution sequences. The execution sequences of the processes should be determined according to functions and internal logic of the processes, and should not be construed as any limitation on the implementation processes of the embodiments of the present invention. In the embodiments of the present invention, the terms "first", "second", and so on are intended to distinguish between similar objects but do not necessarily indicate a specific order or sequence. Moreover, the terms "include", "have", or any other variant thereof are intended to cover a non-exclusive inclusion. A method, system, product, or device is unnecessarily limited to those steps or modules expressly listed, but may include other steps or modules not expressly listed or inherent to such a process, method, product, or device.

Obviously, a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A fault diagnosis method, wherein the method is applied to a vehicle, the vehicle comprises a gateway and an electronic control unit ECU, the gateway is configured to manage the ECU, and the method comprises:
performing, by the gateway, authentication on a diagnostic apparatus, wherein the diagnostic apparatus is configured to obtain information about the vehicle;
if the authentication succeeds, generating, by the gateway, a first shared key, wherein the first shared key is a key shared between the ECU and the diagnostic apparatus;
sending, by the gateway, the first shared key to the ECU; and
encrypting, by the ECU, to-be-transmitted diagnostic data by using the first shared key, and sending encrypted diagnostic data to the diagnostic apparatus.

2. The method according to claim 1, wherein the sending, by the gateway, the first shared key to the ECU comprises:
encrypting, by the gateway, the first shared key to obtain an encrypted first shared key; and
sending, by the gateway, the encrypted first shared key to the ECU.

3. The method according to claim 1 or 2, wherein the method further comprises:
sending, by the gateway, the first shared key to the diagnostic apparatus.

4. The method according to claim 1 or 2, wherein the performing, by the gateway, authentication on a diagnostic apparatus comprises:
receiving, by the gateway, a first signature and a first public key infrastructure PKI certificate from the diagnostic apparatus, wherein the first signature is obtained by signing, by using a private key of the diagnostic apparatus, a first random number generated by the diagnostic apparatus;
if the gateway successfully checks the first PKI certificate, obtaining a public key of the diagnostic apparatus;
and
checking, by the gateway, the first signature by using the public key of the diagnostic apparatus.

5. The method according to claim 4, wherein the generating, by the gateway, a first shared key comprises:
generating, by the gateway, a second random number; and
generating, by the gateway, the first shared key based on the second random number and the first random number, wherein the first random number is obtained after the gateway successfully checks the first signature by using the public key of the diagnostic apparatus.

6. The method according to claim 5, wherein the method further comprises:
sending, by the gateway, the second random number to the diagnostic apparatus, wherein the second random number is used by the diagnostic apparatus to generate the first shared key based on the first random number and the second random number.

7. The method according to any one of claims 1 to 5, wherein the method further comprises:
signing, by the gateway, the second random number by using a private key of the gateway, to obtain a second signature; and
sending, by the gateway, the second signature and a second PKI certificate to the diagnostic apparatus, wherein the second PKI certificate and the second signature are used by the diagnostic apparatus to perform authentication on the gateway.

8. The method according to any one of claims 1 to 3, wherein the performing, by the gateway, authentication on a diagnostic apparatus comprises:
receiving, by the gateway, a first public key infrastructure PKI certificate from the diagnostic apparatus;
if the gateway successfully checks the first PKI certificate, obtaining a public key of the diagnostic apparatus;
generating, by the gateway, a first challenge, and sending the first challenge to the diagnostic apparatus;
receiving, by the gateway, a third signature from the diagnostic apparatus, wherein the third signature is obtained by signing the first challenge by using a private key of the diagnostic apparatus; and
checking, by the gateway, the third signature by using the public key of the diagnostic apparatus.

9. The method according to claim 8, wherein the method further comprises:
receiving, by the gateway, a second challenge from the diagnostic apparatus;
signing, by the gateway, the second challenge by using a private key of the gateway, to obtain a fourth signature;
and
sending, by the gateway, the fourth signature and a second PKI certificate to the diagnostic apparatus, wherein the second PKI certificate and the fourth signature are used by the diagnostic apparatus to perform authentication on the gateway.

10. A fault diagnosis method, wherein the method is applied to a vehicle, the vehicle comprises a gateway and an electronic control unit ECU, the gateway is configured to manage the ECU, and the method comprises:
performing, by the gateway, authentication on a diagnostic apparatus, wherein the diagnostic apparatus is configured to obtain information about the vehicle;
if the authentication succeeds, sending, by the gateway, a first message to the ECU, wherein the first message is used to indicate the ECU to generate a first shared key, and the first shared key is a key shared between the ECU and the diagnostic apparatus;
generating, by the ECU, the first shared key based on the first message; and
encrypting, by the ECU, to-be-transmitted diagnostic data by using the first shared key, and sending encrypted diagnostic data to the diagnostic apparatus.

11. The method according to claim 10, wherein the performing, by the gateway, authentication on a diagnostic apparatus comprises:
receiving, by the gateway, a first public key infrastructure PKI certificate from the diagnostic apparatus;
if the gateway successfully checks the first PKI certificate, obtaining a public key of the diagnostic apparatus;
generating, by the gateway, a third challenge, and sending the third challenge to the diagnostic apparatus;
receiving, by the gateway, a fifth signature from the diagnostic apparatus, wherein the fifth signature is obtained by signing the third challenge by using a private key of the diagnostic apparatus; and
checking, by the gateway, the fifth signature by using the public key of the diagnostic apparatus.

12. The method according to claim 10 or 11, wherein the first message comprises a fourth random number, and the fourth random number is sent by the diagnostic apparatus to the gateway; and
the generating, by the ECU, the first shared key based on the first message comprises:
after receiving the first message, generating, by the ECU, a third random number; and
generating, by the ECU, the first shared key based on the third random number and the fourth random number.

13. A fault diagnosis method, wherein the method is applied to a vehicle, the vehicle comprises a gateway and an electronic control unit ECU, the gateway is configured to manage the ECU, and the method comprises:
performing, by the gateway, authentication on a diagnostic apparatus, wherein the diagnostic apparatus is configured to obtain information about the vehicle;
if the authentication succeeds, generating, by the gateway, a first shared key, wherein the first shared key is a key shared between the ECU and the diagnostic apparatus, and the first shared key is used by the ECU to encrypt to-be-transmitted diagnostic data; and
sending, by the gateway, the first shared key to the ECU.

14. The method according to claim 13, wherein the performing, by the gateway, authentication on a diagnostic apparatus comprises:
receiving, by the gateway, a first signature and a first public key infrastructure PKI certificate from the diagnostic apparatus, wherein the first signature is obtained by signing, by using a private key of the diagnostic apparatus, a first random number generated by the diagnostic apparatus;
if the gateway successfully checks the first PKI certificate, obtaining a public key of the diagnostic apparatus; and
checking, by the gateway, the first signature by using the public key of the diagnostic apparatus.

15. The method according to claim 14, wherein the generating, by the gateway, a first shared key comprises:
generating, by the gateway, a second random number; and
generating, by the gateway, the first shared key based on the first random number and the second random number, wherein the first random number is obtained after the gateway successfully checks the first signature by using the public key of the diagnostic apparatus.

16. The method according to claim 13, wherein the performing, by the gateway, authentication on a diagnostic apparatus comprises:
receiving, by the gateway, a first public key infrastructure PKI certificate from the diagnostic apparatus;
if the gateway successfully checks the first PKI certificate, obtaining a public key of the diagnostic apparatus;
generating, by the gateway, a first challenge, and sending the first challenge to the diagnostic apparatus;
receiving, by the gateway, a third signature from the diagnostic apparatus, wherein the third signature is obtained by signing the first challenge by using a private key of the diagnostic apparatus; and
checking, by the gateway, the third signature by using the public key of the diagnostic apparatus.

17. A fault diagnosis method, wherein the method is applied to a vehicle, the vehicle comprises a gateway and an electronic control unit ECU, the gateway is configured to manage the ECU, and the method comprises:
performing, by the gateway, authentication on a diagnostic apparatus, wherein the diagnostic apparatus is configured to obtain information about the vehicle; and
if the authentication succeeds, sending, by the gateway, a first message to the ECU, wherein the first message is used to indicate the ECU to generate a first shared key, the first shared key is a key shared between the ECU and the diagnostic apparatus, and the first shared key is used by the ECU to encrypt to-be-transmitted diagnostic data.

18. The method according to claim 17, wherein the performing, by the gateway, authentication on a diagnostic apparatus comprises:
receiving, by the gateway, a first public key infrastructure PKI certificate from the diagnostic apparatus;
if the gateway successfully checks the first PKI certificate, obtaining a public key of the diagnostic apparatus;
generating, by the gateway, a third challenge, and sending the third challenge to the diagnostic apparatus;
receiving, by the gateway, a fifth signature from the diagnostic apparatus, wherein the fifth signature is obtained by signing the third challenge by using a private key of the diagnostic apparatus; and
checking, by the gateway, the fifth signature by using the public key of the diagnostic apparatus.

19. The method according to claim 17 or 18, wherein the method further comprises:
if the authentication performed by the gateway on the diagnostic apparatus succeeds, sending, by the gateway to the diagnostic apparatus, a third random number that comes from the ECU, and sending, to the ECU, a fourth random number that comes from the diagnostic apparatus, wherein
the third random number and the fourth random number are used by the ECU to generate the first shared key and used by the diagnostic apparatus to generate the first shared key.

20. An apparatus, comprising a processing module and a transceiver module, wherein
the processing module is configured to: perform authentication on a diagnostic apparatus; and if the authentication succeeds, generate a first shared key, wherein the first shared key is a key shared between an ECU and the diagnostic apparatus, the first shared key is used by the ECU to encrypt to-be-transmitted diagnostic data, and the diagnostic apparatus is configured to obtain information about a vehicle; and
the transceiver module is configured to send the first shared key to the ECU.

21. The apparatus according to claim 20, wherein the processing module is specifically configured to encrypt the first shared key to obtain an encrypted first shared key; and
the transceiver module is specifically configured to send the encrypted first shared key to the ECU.

22. The apparatus according to claim 20 or 21, wherein the transceiver module is further configured to send the first shared key to the diagnostic apparatus.

23. The apparatus according to claim 20 or 21, wherein the transceiver module is specifically configured to receive a first signature and a first public key infrastructure PKI certificate from the diagnostic apparatus, wherein the first signature is obtained by signing, by using a private key of the diagnostic apparatus, a first random number generated by the diagnostic apparatus; and
the processing module is specifically configured to: if successfully checking the first PKI certificate, obtain a public key of the diagnostic apparatus; and check the first signature by using the public key of the diagnostic apparatus.

24. The apparatus according to claim 23, wherein the processing module is specifically configured to: generate a second random number, and generate the first shared key based on the first random number and the second random number, wherein the first random number is obtained after the gateway successfully checks the first signature by using the public key of the diagnostic apparatus.

25. The apparatus according to claim 24, wherein the transceiver module is further configured to send the second random number to the diagnostic apparatus, wherein the second random number is used by the diagnostic apparatus to generate the first shared key based on the first random number and the second random number.

26. The apparatus according to any one of claims 20 to 25, wherein the processing module is further configured to sign the second random number by using a private key of the gateway, to obtain a second signature; and
the transceiver module is further configured to send a second PKI certificate and the second signature to the diagnostic apparatus, wherein the second PKI certificate and the second signature are used by the diagnostic apparatus to perform authentication on the gateway.

27. The apparatus according to any one of claims 20 to 22, wherein the transceiver module is specifically configured to receive a first public key infrastructure PKI certificate from the diagnostic apparatus;
the processing module is specifically configured to: if successfully checking the first PKI certificate, obtain a public key of the diagnostic apparatus; and generate a first challenge;
the transceiver module is further configured to: send the first challenge to the diagnostic apparatus, and receive a third signature from the diagnostic apparatus, wherein the third signature is obtained by signing the first challenge by using a private key of the diagnostic apparatus; and
the processing module is further configured to check the third signature by using the public key of the diagnostic apparatus.

28. The apparatus according to claim 27, wherein the transceiver module is further configured to receive a second challenge from the diagnostic apparatus;
the processing module is further configured to sign the second challenge by using a private key of the gateway, to obtain a fourth signature; and
the transceiver module is further configured to send the fourth signature and a second PKI certificate to the diagnostic apparatus, wherein the second PKI certificate and the fourth signature are used by the diagnostic apparatus to perform authentication on the gateway.

29. An apparatus, comprising a processing module and a transceiver module, wherein
the processing module is configured to: perform authentication on a diagnostic apparatus, wherein the diagnostic apparatus is configured to obtain information about a vehicle; and
if the authentication succeeds, the transceiver module is configured to send a first message to an ECU, wherein the first message is used to indicate the ECU to generate a first shared key, the first shared key is a key shared between the ECU and the diagnostic apparatus, and the first shared key is used by the ECU to encrypt to-be-transmitted diagnostic data.

30. The apparatus according to claim 29, wherein the transceiver module is specifically configured to receive a first public key infrastructure PKI certificate from the diagnostic apparatus;
the processing module is specifically configured to: if successfully checking the first PKI certificate, obtain a public key of the diagnostic apparatus; and generate a third challenge;
the transceiver module is specifically configured to: send the third challenge to the diagnostic apparatus, and receive a fifth signature from the diagnostic apparatus, wherein the fifth signature is obtained by signing the third challenge by using a private key of the diagnostic apparatus; and
the processing module is specifically configured to check the fifth signature by using the public key of the diagnostic apparatus.

31. The apparatus according to claim 29 or 30, wherein the transceiver module is further configured to: if the authentication performed on the diagnostic apparatus succeeds, send, to the diagnostic apparatus, a third random number that comes from the ECU; and send, to the ECU, a fourth random number that comes from the diagnostic apparatus, wherein
the third random number and the fourth random number are used by the ECU to generate the first shared key and used by the diagnostic apparatus to generate the first shared key.

32. A vehicle, comprising the apparatus according to any one of claims 20 to 28 and an electronic control unit ECU, wherein the ECU encrypts to-be-transmitted diagnostic data by using a first shared key that comes from the apparatus, and sends encrypted diagnostic data to a diagnostic apparatus.

33. A vehicle, comprising the apparatus according to any one of claims 29 to 31 and an electronic control unit ECU, wherein the ECU generates a first shared key based on a first message that comes from the apparatus, encrypts to-be-transmitted diagnostic data by using the first shared key, and sends encrypted diagnostic data to a diagnostic apparatus.
